# EUROPEAN PATENT APPLICATION

(11) **EP 4 718 853 A1**
(43) Date of publication of application: **01.04.2026**
(21) Application number: 24814135.0
(22) Date of filing: 09.05.2024
(51) Int. Cl.: H04N 21/414, H04N 21/431, G06Q 30/0241

(54) **ADVERTISEMENT GENERATION METHOD, AND ELECTRONIC DEVICE, NETWORK DEVICE AND COMPUTER STORAGE MEDIUM**

(30) Priority: 30.05.2023 CN 202310624080
(71) Applicant: Huawei Technologies Co., Ltd., Shenzhen, Guangdong 518129 (CN)
(72) Inventor: WANG, Yue, Shenzhen, Guangdong 518129 (CN); ZHONG, Weicai, Shenzhen, Guangdong 518129 (CN)
(74) Representative: Epping - Hermann - Fischer
(86) International application number: PCT/CN2024/091971
(87) International publication number: WO 2024/244934

(57) **Abstract**

This application discloses an advertisement generation method, an electronic device, a network device, and a computer storage medium. The method includes: The electronic device obtains a first advertisement, where the first advertisement includes first content and second content, the first content and the second content are static content, the first content is related to a first function parameter, and the second content is not related to the first function parameter; the electronic device receives a first operation; the electronic device sends a first advertisement generation request to the network device in response to the first operation, where the first advertisement generation request includes the first function parameter and the first advertisement; the network device obtains a second advertisement based on the first advertisement and the first function parameter, and sends the second advertisement to the electronic device; and the electronic device displays the second advertisement, where the second advertisement includes third content and the second content, and the third content is dynamic displaying of the first content. In this application, a dynamic advertisement with good effect can be automatically generated based on the original first advertisement and the first function parameter, and application scenarios are wide.

## Description

This application claims priority to Chinese Patent Application No. 202310624080.7, filed with the China National Intellectual Property Administration on May 30, 2023, and entitled "ADVERTISEMENT GENERATION METHOD, ELECTRONIC DEVICE, NETWORK DEVICE, AND COMPUTER STORAGE MEDIUM", which is incorporated herein by reference in its entirety.

### TECHNICAL FIELD

This application relates to the field of electronic technologies, and in particular, to an advertisement generation method, an electronic device, a network device, and a computer storage medium.

### BACKGROUND

A universal app campaign (universal app campaign, UAC) is an advertisement form. An advertiser only needs to add some basic materials and perform some basic settings, and an electronic device can automatically design advertisements in a plurality of formats oriented to various advertisement networks. It may be understood as material-based intelligent advertisement generation, which may also be referred to as UAC advertisement generation. This can improve advertisement generation efficiency. Most UAC advertisements (which may be referred to as advertisements for short below) are static advertisements. However, compared with a static advertisement, a dynamic advertisement has better user attraction and better delivery effect, for example, a higher click-through rate and a higher conversion rate. Therefore, the dynamic UAC advertisement has gained significant attention, and it is expected that a balance between advertisement generation efficiency and delivery effect can be achieved. However, a current dynamic UAC advertisement generation method cannot implement expected effect.

For example, the dynamic UAC advertisement generation method includes the following steps. The advertiser selects a dynamic material from an external dynamic material library, and adds the dynamic material to a static UAC advertisement, to finally obtain a dynamic UAC advertisement.

Such a generation method depends on the external dynamic material library, and the external dynamic material library usually supports only replacement of an icon-type element. Consequently, an application scenario is limited, and embedding of the external dynamic material is likely to damage consistency of an original advertisement style, resulting in deterioration of overall advertisement effect.

### SUMMARY

This application discloses an advertisement generation method, an electronic device, a network device, and a computer storage medium. A dynamic advertisement with good effect can be automatically generated, and application scenarios are wide.

According to a first aspect, this application provides an advertisement generation method, applied to an electronic device. The method includes: obtaining a first advertisement, where the first advertisement includes first content and second content, the first content and the second content are static content, the first content is related to a first function parameter, and the second content is not related to the first function parameter; receiving a first operation; sending a first advertisement generation request to a network device in response to the first operation, where the first advertisement generation request includes the first function parameter and the first advertisement; and obtaining a second advertisement from the network device, and displaying the second advertisement, where the second advertisement is obtained based on the first advertisement and the first function parameter, the second advertisement includes third content and the second content, and the third content is dynamic displaying of the first content.

In some examples, the electronic device marks the third content when displaying the second advertisement.

In some examples, the first function parameter is obtained by the electronic device based on an input of a user.

In some examples, the first content includes a plurality of pieces of advertisement content.

In the foregoing method, a corresponding dynamic advertisement (namely, the second advertisement) may be automatically generated based on the original first advertisement and the first function parameter. A material used to generate dynamic content is from the original advertisement, and does not depend on an external dynamic material library. Therefore, the generated dynamic advertisement does not damage consistency of an original advertisement style, overall effect is good, and application scenarios are expanded. In addition, when the dynamic advertisement is generated, animation effect may be added to static content (for example, the first content) that is in the first advertisement and that is related to the first function parameter. Therefore, the dynamic content in the dynamic advertisement may be associated with the first function parameter (set by the advertiser). Such a dynamic advertisement better meets a current delivery scenario (for example, represented through the first function parameter), can bring better conversion effect, and effectively improve advertisement delivery effect.

In an implementation, the first content is an image, text, a control, a form, a map, or a calendar related to the first function parameter.

In the foregoing method, there are various types of first content to which animation effect may be added, to further extend an application scenario of this application.

In an implementation, the first advertisement further includes fourth content, the fourth content is dynamic content related to the first function parameter, and the second advertisement further includes the fourth content.

In an implementation, the first function parameter indicates a first delivery target, and the first delivery target is any one of the following: download, activation, registration, form, click, jump, payment, next-day retention, and re-engagement.

In the foregoing method, animation effect may be added to static content (for example, the first content) that is in the first advertisement and that is semantically related to the first delivery target. In this way, an obtained dynamic advertisement (namely, the second advertisement) can well match an advertisement delivery scenario of the first delivery target, and can bring better conversion effect. This effectively improves advertisement delivery effect.

In an implementation, the first content is not related to a second function parameter, the second content is related to the second function parameter, the second function parameter indicates a second delivery target, and the second delivery target is different from the first delivery target. The method further includes: after obtaining the first advertisement, receiving a second operation; sending a second advertisement generation request to the network device in response to the second operation, where the second advertisement generation request includes the second function parameter and the first advertisement; and obtaining a third advertisement from the network device, and displaying the third advertisement, where the third advertisement is obtained based on the first advertisement and the second function parameter, the third advertisement includes the first content and fifth content, and the fifth content is dynamic displaying of the second content.

In the foregoing method, when delivery targets are different, content to which animation effect is added may be different. Correspondingly, generated dynamic advertisements may be different. In other words, in this application, differentiated dynamic advertisements may be generated for different delivery targets. In this way, advertisement delivery scenarios of different delivery targets can be well matched, advantages of the dynamic advertisement in the advertisement delivery scenario can be fully utilized, and advertisement delivery effect can be improved.

In an implementation, the first function parameter includes a first intervention object and a first intervention manner, the first intervention manner is adding animation effect, the first content is related to the first intervention object, and the second content is not related to the first intervention object.

In some examples, the first content is content that belongs to the first intervention object and that is in the first advertisement detected by the network device.

In the foregoing method, static content (for example, the first content) that is semantically related to the first intervention object may be automatically obtained by screening the first advertisement, and animation effect is added to the first content based on the specified first intervention manner, without affecting a status of other content (for example, the second content) that is not related to the first intervention object. In other words, animation effect may be added to specific content that is in the advertisement and that is related to the specified first intervention object in batches, and the advertiser does not need to visually or manually search for content that needs to be intervened or manually add animation effect. This greatly improves generation efficiency and configuration efficiency of the dynamic advertisement.

In an implementation, before receiving the first operation, the method further includes: determining the first intervention object based on first text input by the user; or determining the first intervention object based on a selection operation of the user. The first intervention object includes at least one of the following: text, an image, a button, a link, a form, an input box, a map, and a calendar.

In the foregoing method, the first intervention object may be determined based on text freely input by the user, or may be determined based on the selection operation of the user. Manners of setting the first intervention object are diversified, so that a personalized requirement of the user can be met, and user experience can be improved.

In an implementation, the method further includes: obtaining a fourth advertisement, where the fourth advertisement includes sixth content, and the sixth content is dynamic content; receiving a third operation; sending a third advertisement generation request to the network device in response to the third operation, where the third advertisement generation request includes a third function parameter and the fourth advertisement, the third function parameter includes a second intervention object and a second intervention manner, the second intervention manner is deleting animation effect, and the sixth content is related to the second intervention object; and obtaining a fifth advertisement from the network device, and displaying the fifth advertisement, where the fifth advertisement is obtained based on the third function parameter and the fourth advertisement, the fifth advertisement includes seventh content, and the seventh content is static displaying of the sixth content.

In the foregoing method, dynamic content (for example, the sixth content) semantically related to the second intervention object may be automatically obtained by screening the fourth advertisement, and animation effect is deleted from the sixth content based on the specified second intervention manner. In other words, animation effect may be deleted from specific content that is in the advertisement and that is related to the specified second intervention object in batches, and the advertiser does not need to visually or manually search for the content that needs to be intervened or manually delete the animation effect. This greatly improves configuration efficiency of the dynamic advertisement.

In an implementation, the method further includes: before receiving the first operation, receiving second text added by the user to the first advertisement, where the first function parameter indicates to dynamically display content related to the second text, the first content is related to the second text, and the second content is not related to the second text.

In some examples, the second text is an advertisement copy added to the first advertisement.

In some examples, the first function parameter includes the second text. In some examples, the first function parameter includes an intervention manner of adding animation effect.

In the foregoing method, static content (for example, the first content) semantically related to an added advertisement copy (for example, the second text) may be automatically obtained by screening the first advertisement, and animation effect is added to the first content based on the first function parameter, without affecting a status of other content (for example, the second content) that is not related to the first intervention object. In other words, animation effect may be added to specific content that is in the advertisement and that is related to the added advertisement copy in batches, and the advertiser does not need to visually or manually search for the content that needs to be intervened or manually add the animation effect. This greatly improves generation efficiency and configuration efficiency of the dynamic advertisement.

In an implementation, the method further includes: obtaining a sixth advertisement, where the sixth advertisement includes eighth content and an advertisement copy, and the eighth content is dynamic content; receiving a fourth operation; deleting third text from the advertisement copy of the sixth advertisement in response to the fourth operation, where the eighth content is related to the third text; receiving a fifth operation; sending a fourth advertisement generation request to the network device in response to the fifth operation, where the fourth advertisement generation request includes a fourth function parameter and the sixth advertisement, and the fourth function parameter indicates to statically display content related to the third text; and obtaining a seventh advertisement from the network device, and displaying the seventh advertisement, where the seventh advertisement is obtained based on the fourth function parameter and the sixth advertisement, the seventh advertisement includes ninth content, and the ninth content is static displaying of the eighth content.

In the foregoing method, dynamic content (for example, the eighth content) semantically related to a deleted advertisement copy (for example, the third text) may be automatically obtained by screening the sixth advertisement, and animation effect is deleted from the eighth content based on the fourth function parameter. In other words, animation effect may be deleted from specific content that is in the advertisement and that is related to the deleted advertisement copy in batches, and the advertiser does not need to visually or manually search for the content that needs to be intervened or manually delete the animation effect. This greatly improves configuration efficiency of the dynamic advertisement.

In an implementation, the second advertisement further includes tenth content, the third content is first dynamic displaying, and the tenth content is second dynamic displaying.

In some examples, the third content and the tenth content have same dynamic effect. In some other examples, the third content and the tenth content have different dynamic effect.

In some examples, the third content and the tenth content are marked in a same manner. In some other examples, the third content and the tenth content are marked in different manners. In this way, the user can intuitively and conveniently obtain different dynamic content, so that dynamic content in the dynamic advertisement can be verified in batches, and the user does not need to visually or manually search for the dynamic content. This greatly improves verification efficiency. In some examples, the third content and the tenth content are marked in different manners, and the third content and the tenth content are respectively related to different advertisement copy segments of the second advertisement. Optionally, a manner of marking an advertisement copy segment related to the third content is different from a manner of marking an advertisement copy segment related to the tenth content. Optionally, the manner of marking the third content is the same as or related to the manner of marking the advertisement copy segment related to the third content. Optionally, the manner of marking the tenth content is the same as or related to the manner of marking the advertisement copy segment related to the tenth content.

In the foregoing method, the electronic device may mark, in a visual interface, the dynamic content and the related advertisement copy segment in the dynamic advertisement, so that the user can intuitively and conveniently obtain a correlation between the dynamic content and the advertisement copy segment in the dynamic advertisement. Therefore, the dynamic content in the dynamic advertisement can be verified in batches based on the correlation, and the user does not need to visually or manually search for the dynamic content and the related advertisement copywriting segment. This greatly improves verification efficiency.

In an implementation, the first function parameter includes a third intervention manner and a first area parameter, the third intervention manner is adding animation effect, the first area parameter indicates a first area in the first advertisement, the first content is located in the first area, and the second content is located outside the first area.

In some examples, the first area is determined by the electronic device based on a selection operation of the user.

In the foregoing method, static content (for example, the first content) located in the first area may be automatically obtained by screening the first advertisement, and animation effect is added to the first content in the third intervention manner, without affecting a status of other content (for example, the second content) located outside the first area. In other words, animation effect may be added to specific content in a specific area in the advertisement in batches, and the advertiser does not need to visually or manually search for the content to be intervened or manually add animation effect. This greatly improves generation efficiency and configuration efficiency of the dynamic advertisement.

In an implementation, the method further includes: obtaining an eighth advertisement, where the eighth advertisement includes eleventh content, and the eleventh content is dynamic content; receiving a sixth operation; sending a fifth advertisement generation request to the network device in response to the sixth operation, where the fifth advertisement generation request includes a fifth function parameter and the eighth advertisement, the fifth function parameter includes a fourth intervention manner and a second area parameter, and the fourth intervention manner is deleting animation effect, the second area parameter indicates a second area in the eighth advertisement, and the eleventh content is located in the second area; and obtaining a ninth advertisement from the network device, and displaying the ninth advertisement, where the ninth advertisement is obtained based on the fifth function parameter and the eighth advertisement, the ninth advertisement includes twelfth content, and the twelfth content is static displaying of the eleventh content.

In the foregoing method, dynamic content (for example, the eleventh content) located in the second area may be automatically obtained by screening the eighth advertisement, and animation effect is deleted from the eleventh content in the fourth intervention manner. In other words, animation effect may be deleted from the specific content located in the specific area in the advertisement in batches, and the advertiser does not need to visually or manually search for the content to be intervened or manually delete the animation effect. This greatly improves configuration efficiency of the dynamic advertisement.

According to a second aspect, this application provides another advertisement generation method, applied to a network device. The method includes: receiving a first advertisement generation request sent by an electronic device, where the first advertisement generation request includes a first function parameter and a first advertisement, the first advertisement includes first content and second content, the first content and the second content are static content, the first content is related to the first function parameter, and the second content is not related to the first function parameter; obtaining a second advertisement based on the first function parameter and the first advertisement, where the second advertisement includes third content and the second content, and the third content is dynamic displaying of the first content; and sending the second advertisement to the electronic device.

In some examples, the first content includes a plurality of pieces of advertisement content.

In an implementation, the first content is an image, text, a control, a form, a map, or a calendar related to the first function parameter.

In an implementation, the first advertisement further includes fourth content, the fourth content is dynamic content related to the first function parameter, and the second advertisement further includes the fourth content.

In an implementation, the first function parameter indicates a first delivery target, and the first delivery target is any one of the following: download, activation, registration, form, click, jump, payment, next-day retention, and re-engagement.

In an implementation, the first content is not related to a second function parameter, the second content is related to the second function parameter, the second function parameter indicates a second delivery target, and the second delivery target is different from the first delivery target. The method further includes: receiving a second advertisement generation request sent by the electronic device, where the second advertisement generation request includes the second function parameter and the first advertisement; obtaining a third advertisement based on the second function parameter and the first advertisement, where the third advertisement includes the first content and fifth content, and the fifth content is dynamic displaying of the second content; and sending the third advertisement to the electronic device.

In an implementation, the first function parameter includes a first intervention object and a first intervention manner, the first intervention manner is adding animation effect, the first content is related to the first intervention object, and the second content is not related to the first intervention object.

In an implementation, the first intervention object is determined by the electronic device based on first text input by a user, or the first intervention object is determined by the electronic device based on a selection operation of the user. The first intervention object includes at least one of the following: text, an image, a button, a link, a form, an input box, a map, and a calendar.

In an implementation, the method further includes: receiving a third advertisement generation request sent by the electronic device, where the third advertisement generation request includes a third function parameter and a fourth advertisement, the fourth advertisement includes sixth content, the sixth content is dynamic content, the third function parameter includes a second intervention object and a second intervention manner, the second intervention manner is deleting animation effect, and the sixth content is related to the second intervention object; obtaining a fifth advertisement based on the third function parameter and the fourth advertisement, where the fifth advertisement includes seventh content, and the seventh content is static displaying of the sixth content; and sending the fifth advertisement to the electronic device.

In an implementation, the first function parameter indicates to dynamically display content related to second text, the first content is related to the second text, the second content is not related to the second text, and the second text is text that is added by the user to the first advertisement and that is received by the electronic device.

In some examples, the second text is an advertisement copy added to the first advertisement.

In some examples, the first function parameter includes the second text. In some examples, the first function parameter includes an intervention manner of adding animation effect.

In an implementation, the method further includes: receiving a fourth advertisement generation request sent by the electronic device, where the fourth advertisement generation request includes a fourth function parameter and a sixth advertisement, the fourth function parameter indicates to statically display content related to third text, the sixth advertisement includes eighth content and an advertisement copy, the eighth content is dynamic content, the eighth content is related to the third text, and the third text is text deleted by the electronic device from the advertisement copy of the sixth advertisement in response to a user operation; obtaining a seventh advertisement based on the fourth function parameter and the sixth advertisement, where the seventh advertisement includes ninth content, and the ninth content is static displaying of the eighth content; and sending the seventh advertisement to the electronic device.

In an implementation, the second advertisement further includes tenth content, the third content is first dynamic displaying, and the tenth content is second dynamic displaying.

In an implementation, the first function parameter includes a third intervention manner and a first area parameter, the third intervention manner is adding animation effect, the first area parameter indicates a first area in the first advertisement, the first content is located in the first area, and the second content is located outside the first area.

In an implementation, the method further includes: receiving a fifth advertisement generation request sent by the electronic device, where the fifth advertisement generation request includes a fifth function parameter and an eighth advertisement, the fifth function parameter includes a fourth intervention manner and a second area parameter, the fourth intervention manner is deleting animation effect, the second area parameter indicates a second area in the eighth advertisement, the eighth advertisement includes eleventh content, the eleventh content is dynamic content, and the eleventh content is located in the second area; obtaining a ninth advertisement based on the fifth function parameter and the eighth advertisement, where the ninth advertisement includes twelfth content, and the twelfth content is static displaying of the eleventh content; and sending the ninth advertisement to the electronic device.

According to a third aspect, this application provides an electronic device, including a transceiver, a processor, and a memory. The memory is configured to store a computer program, and the processor invokes the computer program, so that the electronic device performs the advertisement generation method provided in any one of the first aspect or the implementations of the first aspect. According to a fourth aspect, this application provides a network device, including a transceiver, a processor, and a memory. The memory is configured to store a computer program, and the processor invokes the computer program, so that the network device performs the advertisement generation method provided in any one of the second aspect or the implementations of the second aspect.

According to a fifth aspect, this application provides a computer storage medium. The computer storage medium stores a computer program. When the computer program is executed by a processor, the advertisement generation method provided in any one of the first aspect, the second aspect, and the implementations of the first aspect and the second aspect of this application is performed.

According to a sixth aspect, this application provides a computer program product. When the computer program product runs on a device, the device is enabled to perform the advertisement generation method provided in any one of the first aspect, the second aspect, and the implementations of the first aspect and the second aspect of this application.

According to a seventh aspect, this application provides an electronic device. The electronic device includes the method or apparatus for performing any aspect or implementation of this application. The electronic device is, for example, a chip.

It should be understood that descriptions of technical features, technical solutions, beneficial effect, or similar languages in this application do not imply that all features and advantages can be implemented in any single implementation. On the contrary, it may be understood that descriptions of features or beneficial effect mean that at least one implementation includes specific technical features, technical solutions, or beneficial effect. Therefore, the descriptions of the technical features, the technical solutions, or the beneficial effect in this application do not necessarily mean a same implementation. Further, the technical features, the technical solutions, and the beneficial effect described in this application may be combined in any appropriate manner. Persons skilled in the art may understand that this application may be implemented without one or more specific technical features or technical solutions, or beneficial effect in a specific implementation. In other implementations, additional technical features and beneficial effect may also be identified in specific implementations that do not reflect all implementations.

### BRIEF DESCRIPTION OF DRAWINGS

The following describes accompanying drawings used in this application.
FIG. 1A is a diagram of an architecture of an advertisement generation system according to this application;
FIG. 1B is a diagram of an architecture of another advertisement generation system according to this application;
FIG. 2A is a diagram of a hardware structure of an electronic device according to this application;
FIG. 2B is a diagram of a software architecture of an electronic device according to an embodiment of this application;
FIG. 2C is a diagram of a hardware structure of a network device according to this application;
FIG. 3 is a diagram of generating a dynamic advertisement according to this application;
FIG. 4(A) and FIG. 4(B) each are a diagram of a user interface according to this application;
FIG. 5(A) and FIG. 5(B) each are a diagram of another user interface according to this application;
FIG. 6(A) and FIG. 6(B) each are a diagram of still another user interface according to this application;
FIG. 7A is a diagram of a type of dynamic content intervention according to this application;
FIG. 7B is a diagram of another type of dynamic content intervention according to this application;
FIG. 8(A) and FIG. 8(B) each are a diagram of yet another user interface according to this application;
FIG. 9(A) and FIG. 9(B) each are a diagram of still yet another user interface according to this application;
FIG. 10A is a diagram of a type of dynamic content verification according to this application;
FIG. 10B is a diagram of another type of dynamic content verification according to this application;
FIG. 11(A) and FIG. 11(B) each are a diagram of a further user interface according to this application;
FIG. 12 is a diagram of a still further user interface according to this application;
FIG. 13 is a diagram of a yet further user interface according to this application;
FIG. 14(A) and FIG. 14(B) each are a diagram of a still yet further user interface according to this application;
FIG. 15 is a schematic flowchart of an advertisement generation method according to this application;
FIG. 16 is a schematic flowchart of a dynamic advertisement generation process according to this application;
FIG. 17 is a schematic flowchart of another advertisement generation method according to this application;
FIG. 18 is a schematic flowchart of a dynamic content intervention process according to this application;
FIG. 19A and FIG. 19B are a schematic flowchart of still another advertisement generation method according to this application; and
FIG. 20 is a schematic flowchart of yet another advertisement generation method according to this application.

### DESCRIPTION OF EMBODIMENTS

The following describes technical solutions of embodiments in this application with reference to accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A current dynamic UAC advertisement generation method may include the following steps.
1. An electronic device loads and displays a static advertisement 1 and a dynamic material library.
2. The electronic device receives a user operation (of an advertiser) for a dynamic material 1 in the dynamic material library.

For example, the user operation includes dragging the dynamic material 1 onto the static advertisement 1. For example, after dragging the dynamic material 1 onto the static advertisement 1, a user may further adjust a size and a location of the dynamic material 1, to prevent the dynamic material 1 from blocking key content (for example, a main commodity image and an advertisement slogan) in the static advertisement 1.

In response to the user operation, the electronic device may combine the dynamic material 1 (whose size and location may be adjusted) with the static advertisement 1 to generate a dynamic advertisement. Specifically, the following steps 3 to 6 may be performed.

3. The electronic device splits the dynamic material 1 frame by frame to obtain m material frames, where m is a positive integer greater than 1.

4. The electronic device copies the static advertisement 1 for m times, to obtain m static advertisement frames.

5. The electronic device respectively combines the m material frames with the m static advertisement frames (to be specific, combines an i^{th} material frame with an i^{th} static advertisement frame, where i is a positive integer less than or equal to m), to obtain m dynamic advertisement frames.

6. The electronic device obtains the m dynamic advertisement frames through combining to obtain the dynamic advertisement.

The foregoing method can implement dynamicization of partial advertisement content depending on the external dynamic material library. Embedding of the external dynamic material may damage consistency of an original advertisement style, resulting in deterioration of overall advertisement effect. The external dynamic material library usually supports replacement of only an icon-type element, resulting in a limited application scenario. In addition, the advertiser needs to manually set the size and the location of the dynamic material, to avoid blocking the content in the static advertisement. As a result, dynamic advertisements cannot be generated in batches, and advertisement generation efficiency is low.

In addition, the advertiser usually want to generate dynamic advertisements based on different delivery targets, for example, delivery targets such as activation (that is, an application is installed and started by a user), registration (that is, a user registers an account), and payment (that is, a user pays for advertisement-related content). However, in the current dynamic UAC advertisement generation method, only one type of dynamic advertisement can be uniformly generated, and dynamic advertisements cannot be generated for different delivery targets, resulting in poor advertisement delivery effect.

In addition, currently, a small quantity of verifiable items and configurable items for generating a dynamic advertisement are provided for the advertiser. As a result, a requirement of the advertiser cannot be implemented, or even if a requirement can be implemented, complex operations are required and advertisement effect is poor. For example, the advertiser needs to obtain dynamic content by screening, with naked eyes, a dynamic advertisement with rich and complex content, and guess whether the dynamic content is associated with a segment in an advertisement copy (which may be referred to as an advertisement copy segment for short), to verify whether the dynamic content is applicable to the current advertisement. Batch verification of dynamic content by the advertiser is not supported. For another example, when the advertiser wants to add or delete partial animation effect in batches in an advertisement, the advertiser usually needs to perform operations one by one, for example, adds dynamic materials one by one according to the current dynamic UAC advertisement generation method. Batch intervention (adding or deleting animation effect) for advertisement content is not supported, resulting in poor availability of a dynamic advertisement function.

This application provides an advertisement generation method, to generate a dynamic advertisement based on a static advertisement and a delivery target set by an advertiser. Different delivery targets may correspond to different generated dynamic advertisements, and a material used to generate dynamic content is from an original advertisement. Therefore, the generated dynamic advertisement does not damage consistency of an original advertisement style, and overall effect is good. This generation method does not depend on an external dynamic material library, which greatly expands an application scenario. In addition, dynamic advertisements with good effect can be generated in batches. This greatly improves advertisement generation efficiency. In addition, the generated dynamic advertisement is associated with the set delivery target (association may also be referred to as correlation). Such a dynamic advertisement can bring better conversion effect, effectively improve advertisement delivery effect, and improve function availability.

The advertisement may include but is not limited to content such as an image, an animation, text, a control, a form, a map, and a calendar. When all content included in the advertisement is static content (for example, an image and text), the advertisement is a static advertisement. When the advertisement includes at least one piece of dynamic content (for example, an animation), the advertisement is a dynamic advertisement. The animation is, for example, but is not limited to, a graphics interchange format (graphics interchange format, GIF) or a Flash format. The dynamic advertisement may include a plurality of frames of images, and display manners of same dynamic content in any two frames of images may be different, for example, including but not limited to different locations, different sizes, and different shapes.

The delivery target may include but is not limited to: download (that is, an application is downloaded and installed by a user), activation (that is, an application is installed and started by a user), registration (that is, a user registers an account), form (that is, user information is collected via a form), click (that is, a user clicks an advertisement), jump (that is, a user performs an operation on an advertisement so that a display page jumps to a details page of the advertisement or another advertisement page), payment (that is, a user pays for advertisement-related content), next-day retention (that is, a user re-starts an application the next day after the application is downloaded/installed by the user), re-engagement (that is, an application is re-started after the application is not used for a period of time after being downloaded or installed), valuable user behavior customized by the advertiser, and the like.

In an implementation, in this application, based on text input by the advertiser, content that is in at least one advertisement and that is associated with the text (which may be referred to as an intervention object for short) may be intervened. Instead of manually adding a dynamic material as in the current dynamic UAC advertisement generation method, the advertiser directly inputs the text, to intervene in the associated advertisement content in the at least one advertisement.

In an implementation, in this application, dynamic content and an advertisement copy segment associated with the dynamic content in a dynamic advertisement may be marked in a visual interface. For ease of description, any piece of dynamic content and an associated advertisement copy segment may be referred to as a piece of associated content, and different marking manners may be used for different associated content. For example, different associated content is marked by different colors, so that the advertiser can intuitively and conveniently obtain an association relationship between the dynamic content and the advertisement copy segment, and the advertiser can implement efficient batch verification on the dynamic content. Optionally, based on content modified (which may be referred to as modified content for short) by the advertiser for an advertisement copy, intervention (adding animation effect or deleting animation effect) may be performed on advertisement content associated with the modified content.

A manner of marking the dynamic content may include but is not limited to adding an outline, adding a border (which may also be referred to as a detection box), displaying a heatmap (that is, displaying an area in which the dynamic content is located in a special highlight form), setting a color to a specific color, displaying through blinking, displaying a coordinate value, and the like. A manner of marking the advertisement copy segment may include but is not limited to highlighting, changing a font weight, changing a font size, changing a font color, setting a font to italic, changing a font type (for example, SimSun and KaiTi represent different types), setting an underline, setting a shading background (including setting a color and a pattern of the shading background), setting a border (including a shape, thickness, and a color of the border), displaying a coordinate value, and the like.

In the foregoing two implementations, verifiable items and configurable items for generating the dynamic advertisement are extended, so that the advertiser can accurately configure animation effect of any content in any advertisement. This greatly improves generation efficiency and configuration efficiency of the dynamic advertisement, and improves availability of a dynamic advertisement function.

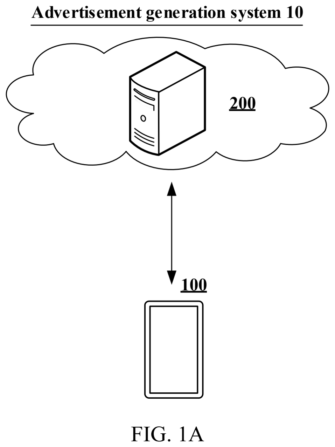

FIG. 1A illustrates an architecture of an advertisement generation system 10.

As shown in FIG. 1A, the advertisement generation system 10 may include an electronic device 100 and a network device 200. The electronic device 100 and the network device 200 may establish a connection and communicate with each other in a wired and/or wireless manner. The wired manner includes, for example, but is not limited to, a high definition multimedia interface (high definition multimedia interface, HDMI), a universal serial bus (universal serial bus, USB), and a network cable (for example, a twisted pair, a coaxial cable, or an optical fiber). The wireless manner includes, for example, but is not limited to, a wireless local area network (wireless local area network, WLAN) (for example, wireless fidelity (wireless fidelity, Wi-Fi)), satellite communication, and cellular communication.

The electronic device 100 may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart household device like a smart television or a smart camera, a wearable device like a smart band, a smartwatch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, or a smart city device. A specific type of the electronic device is not specially limited in embodiments of this application.

The network device 200 may include at least one server. In some examples, the network device 200 may be a Linux server, a Windows server, or another server device that can provide simultaneous access of a plurality of devices. In some examples, the network device 200 may be a server cluster including a plurality of regions, a plurality of equipment rooms, and a plurality of servers. In some examples, the network device 200 may be a cloud device. The cloud device supports, for example, a message storage and distribution program, a large-scale data storage program, a large-scale data processing program, and a data redundancy backup program.

In some embodiments, the electronic device 100 may communicate with the network device 200 based on a browser/server (browser/server, B/S) architecture, or may communicate with the network device 200 based on a client/server (client/server, C/S) architecture. The electronic device 100 may be configured to: receive an advertisement material and a user operation (the user operation is, for example, used to set a function parameter of a dynamic advertisement function) that are input by an advertiser, and obtain and display a corresponding static advertisement/dynamic advertisement. In an implementation, the electronic device 100 may request, from the network device 200, to obtain a dynamic advertisement associated with a delivery target set by the advertiser, and display the dynamic advertisement returned by the network device 200. In an implementation, the electronic device 100 may request, from the network device 200, to obtain verification content (that is, an association relationship between dynamic content and an advertisement copy segment) in the dynamic advertisement, and mark the dynamic advertisement and the associated advertisement copy segment in the dynamic advertisement based on the verification content returned by the network device 200. In an implementation, the electronic device 100 may request, from the network device 200, to obtain a static advertisement/dynamic advertisement obtained through intervention, and display the static advertisement/dynamic advertisement returned by the network device 200.

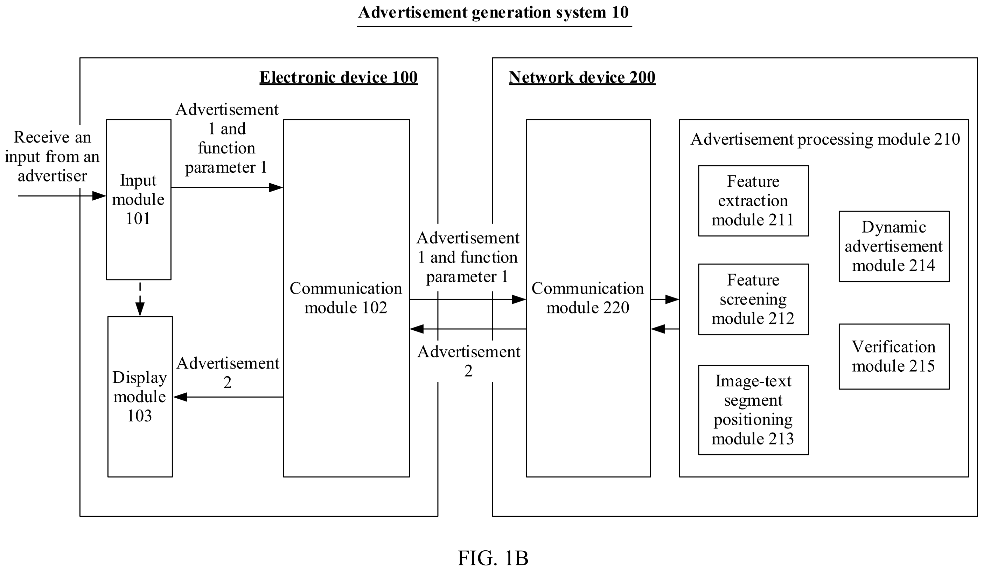

FIG. 1B illustrates an architecture of another advertisement generation system 10.

As shown in FIG. 1B, the electronic device 100 in the advertisement generation system 10 may include an input module 101, a communication module 102, and a display module 103, and the network device 200 in the advertisement generation system 10 may include an advertisement processing module 210 and a communication module 220. The advertisement processing module 210 may include a feature extraction module 211, a feature screening module 212, an image-text segment positioning module 213, a dynamic advertisement module 214, and a verification module 215.

The input module 101 may be configured to receive an input of the advertiser.

In an implementation, the input module 101 may be configured to obtain the advertisement material based on the input of an advertiser. The advertisement material includes, for example, but is not limited to, text such as an advertisement name, a theme, a content abstract, a description (for example, a function description of a commodity advertisement or a service content description of a service advertisement), and an advertisement copy that are input by the advertiser, non-text content such as an image, a video, and a link (which may also be referred to as a landing page) that are uploaded by the advertiser, and information such as text, an image, a video, and a link obtained through crawling a landing page of an advertisement. The advertisement material obtained by the input module 101 may be used to generate a static advertisement/dynamic advertisement. The generated static advertisement/dynamic advertisement may be sent to the display module 103 for display. The generated static advertisement may alternatively be sent to the network device 200 for processing to obtain a corresponding dynamic advertisement, and the generated dynamic advertisement may alternatively be sent to the network device 200 for processing to obtain verification content (that is, an association relationship between dynamic content and an advertisement copy segment). The generated static advertisement/dynamic advertisement may alternatively be sent to the network device 200 for processing to obtain an intervened advertisement.

In an implementation, the input module 101 may receive a dynamic advertisement function parameter (which may be referred to as a function parameter for short) input by the advertiser. The function parameter includes, for example, but is not limited to, a parameter indicating a delivery scenario, a parameter indicating a delivery target (for a specific example, refer to the foregoing description of the delivery target), a parameter indicating a currently used function, configured text (an intervention object input by the advertiser or content modified by the advertiser for an advertisement copy), and a parameter indicating an intervention manner (adding animation effect or deleting animation effect). The delivery scenario may include but is not limited to a splash screen advertisement (that is, a scenario in which an advertisement is displayed when an application is started and loaded, and a main interface of the application is displayed after the advertisement is displayed and automatically closed, which is suitable for an application with a large quantity of active users and frequent usage), an interstitial advertisement (that is, a scenario in which an advertisement is displayed when an application is started, paused, or exited, and the advertisement is displayed at time that avoids normal experience of a user on the application, quickly attracts the user's attention, and has good exposure effect), a native advertisement (that is, the advertisement is embedded into an application as a part of news feeds or service content, which has low user interference and is commonly used in the news feed scenario), a banner advertisement (that is, a scenario in which an advertisement is displayed in a form of a notification bar or rectangle, which is applicable to an interface where a user stays for a long time or frequently accesses the page), a rewarded video advertisement (that is, a scenario in which a user obtains an incentive of an application by watching a complete video advertisement, user experience is good, and a revenue is high), a delivery scenario that can be supported by other media, and the like. The currently used function may be a dynamic advertisement generation function (that is, dynamicization of image content that is in a static advertisement and that is closely related to a delivery target), a dynamic content verification function (that is, an association relationship between dynamic content and an advertisement copy segment in a dynamic advertisement is marked in a visual interface, and optionally, advertisement content associated with modified content is intervened based on modification of an advertisement copy by the advertiser), or a dynamic content intervention function (that is, advertisement content that is in an advertisement and that is closely related to an intervention object is intervened). The function parameter received by the input module 101 may be sent to the network device 200, so that the network device 200 processes an advertisement based on the function parameter.

The communication module 102 may be configured to: receive any advertisement (which may be referred to as an advertisement 1) and a function parameter (which may be referred to as a function parameter 1) for the advertisement that are sent by the input module 101, and send the advertisement 1 and the function parameter 1 to the communication module 220 of the network device 200. The communication module 102 may be further configured to receive an advertisement 2 sent by the communication module 220, and the advertisement 2 is obtained by the network device 200 based on the advertisement 1 and the function parameter 1. In an implementation, the advertisement 2 sent by the communication module 220 may further include verification content of the advertisement 2.

The display module 103 may be configured to display a static advertisement/dynamic advertisement, for example, display the advertisement 1 sent by the input module 101, or display the advertisement 2 sent by the communication module 102. The display module 103 may be further configured to display content associated with the advertisement, for example, mark a dynamic advertisement and an associated advertisement copy segment in the displayed advertisement based on the verification content sent by the communication module 102, or display a setting option of a dynamic advertisement function, so that the advertiser inputs a function parameter.

The communication module 220 of the network device 200 may be configured to: receive the advertisement 1 and the function parameter 1 that are sent by the communication module 102 of the electronic device 100, and send the advertisement 1 and the function parameter 1 to the advertisement processing module 210 for processing. The communication module 220 may receive the advertisement 2 returned by the advertisement processing module 210, and forward the advertisement 2 to the communication module 102. In an implementation, the advertisement 2 received by the communication module 220 may further include the verification content of the advertisement 2.

The advertisement processing module 210 may be configured to process the advertisement 1 based on the function parameter 1, to obtain the advertisement 2 corresponding to the advertisement 1, and optionally, the verification content of the advertisement 2. In the advertisement processing module 210, the feature extraction module 211 may be configured to perform at least one of the following: extracting a feature of an image (which may be referred to as an image feature for short) in the static advertisement/dynamic advertisement, extracting a text feature of an advertisement copy, extracting a text feature of an intervention object, and the like. The feature screening module 212 may be configured to: calculate a degree of correlation between the image feature and the text feature, and obtain an image feature and a text feature (which may be referred to as image and text features for short) that have a high correlation degree through screening. The image-text segment positioning module 213 may be configured to position content corresponding to an image feature obtained through screening in the advertisement. The image feature obtained through screening may be an image feature in the image and text features obtained by the feature screening module 212, or may be an image feature in image and text features (for example, image and text features that are obtained through further screening by using the delivery target as a constraint and that is strongly associated with the delivery target) obtained through further screening on the image and text features obtained by the feature screening module 212. In an implementation, content obtained by at least one of the feature extraction module 211, the feature screening module 212, and the image-text segment positioning module 213 may be sent to the dynamic advertisement module 214 for processing, to obtain the advertisement 2. For example, the function parameter 1 includes a parameter indicating the dynamic advertisement generation function, the function parameter 1 includes a parameter indicating the dynamic content intervention function, or the function parameter 1 includes a parameter indicating the dynamic content verification function and includes the modified content of the advertisement copy. In an implementation, content obtained by at least one of the feature extraction module 211, the feature screening module 212, and the image-text segment positioning module 213 may be sent to the verification module 215 for processing, to obtain the verification content of the advertisement 2. For example, the function parameter 1 includes a parameter indicating the dynamic content verification function (optionally, the modified content of the advertisement copy is not included). The dynamic advertisement module 214 may be configured to process the advertisement 1 based on the content positioned in the advertisement 1 by the image-text segment positioning module 213, for example, add animation effect (which may also be referred to as dynamicization) or delete animation effect (which may also be referred to as staticization) for the positioned content, to obtain the advertisement 2 corresponding to the advertisement 1. The verification module 215 may be configured to position dynamic content and an associated advertisement copy segment in the advertisement 2 based on the image and text features obtained by the feature screening module 212, that is, determine an association relationship between the dynamic content and the advertisement copy segment in the advertisement 2. The association relationship may be returned to the electronic device 100 as the verification content.

The following describes an electronic device in this application by using an example.

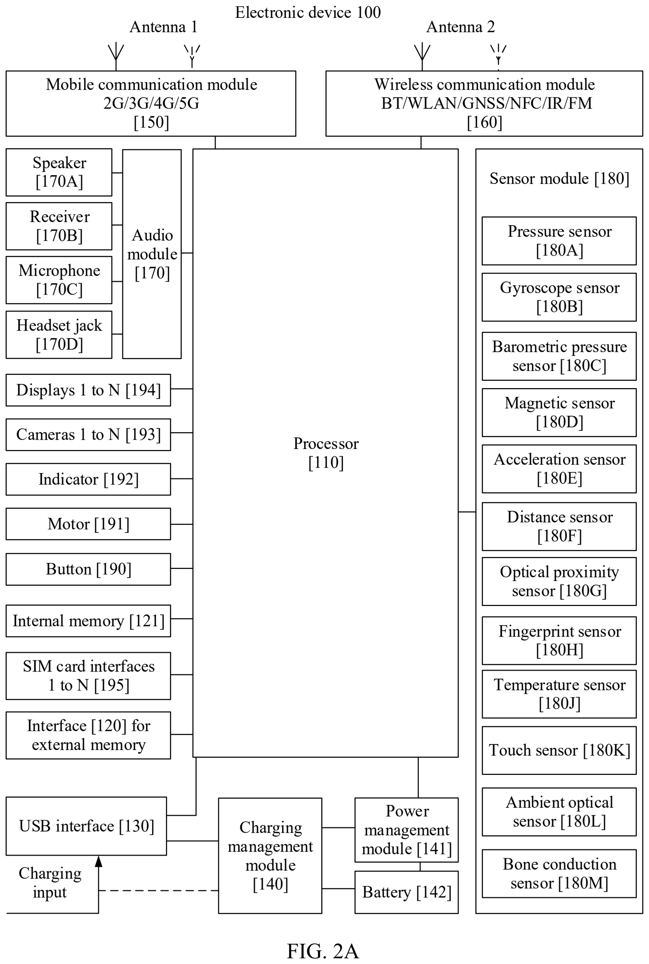

FIG. 2A is an example of a diagram of a hardware structure of an electronic device 100.

As shown in FIG. 2A, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent components, or may be integrated into one or more processors.

The controller may generate an operation control signal based on an instruction operation code and a time sequence signal, to complete control of instruction reading and instruction execution. A memory may be further disposed in the processor 110, and is configured to store instructions and data. In an implementation, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The charging management module 140 is configured to receive a charging input from a charger. The charger may be a wireless charger or a wired charger. In some implementations of wired charging, the charging management module 140 may receive a charging input from the wired charger through the USB interface 130. In some implementations of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In another implementation, the power management module 141 may alternatively be disposed in the processor 110. In another implementation, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like. The wireless communication function of the electronic device 100 may be used to communicate with a network device 200 or another device.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In another implementation, the antenna may be used in combination with a tuning switch.

The mobile communication module 150 may provide a wireless communication solution that is applied to the electronic device 100 and that includes a second generation (second generation, 2G) mobile communication technology/a third generation (third generation, 3G) mobile communication technology/a fourth generation (fourth generation, 4G) mobile communication technology/a fifth generation (fifth generation, 5G) mobile communication technology/a sixth generation (sixth generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some functional modules of the mobile communication module 150 may be disposed in the processor 110. In an implementation, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In an implementation, the modem processor may be an independent component. In another implementation, the modem processor may be independent of the processor 110, and is disposed in a same device as the mobile communication module 150 or another functional module. The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In an implementation, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In an implementation, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In an implementation, the electronic device 100 may include one or N cameras 193, where N is a positive integer greater than 1.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, or the like.

The audio module 170 is configured to convert digital audio information into an analog audio signal for output, and is also configured to convert analog audio input into a digital audio signal. The audio module 170 may be further configured to code and decode an audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. In an implementation, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In an implementation, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. The barometric pressure sensor 180C is configured to measure barometric pressure. The magnetic sensor 180D includes a Hall sensor. The acceleration sensor 180E may detect accelerations in various directions (usually on three axes) of the electronic device 100. The distance sensor 180F is configured to measure a distance. The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The ambient light sensor 180L is configured to sense ambient light brightness. The fingerprint sensor 180H is configured to collect a fingerprint. The temperature sensor 180J is configured to detect a temperature. The bone conduction sensor 180M may obtain a vibration signal.

The touch sensor 180K is also referred to as a "touch device". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer a detected touch operation to the application processor to determine a touch event type. A visual output associated with the touch operation may be provided via the display 194. In another implementation, the touch sensor 180K may alternatively be disposed on a surface of the electronic device 100 at a location different from that of the display 194.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

A software system of the electronic device 100 may use a layered architecture, an event-driven architecture, a microkernel architecture, a microservice architecture, or a cloud architecture. For example, a software system of the layered architecture may be an Android (Android) system, or may be a Harmony (harmony) operating system (operating system, OS), or another software system. In embodiments of this application, an Android system with a layered architecture is used as an example to describe a software structure of the electronic device 100.

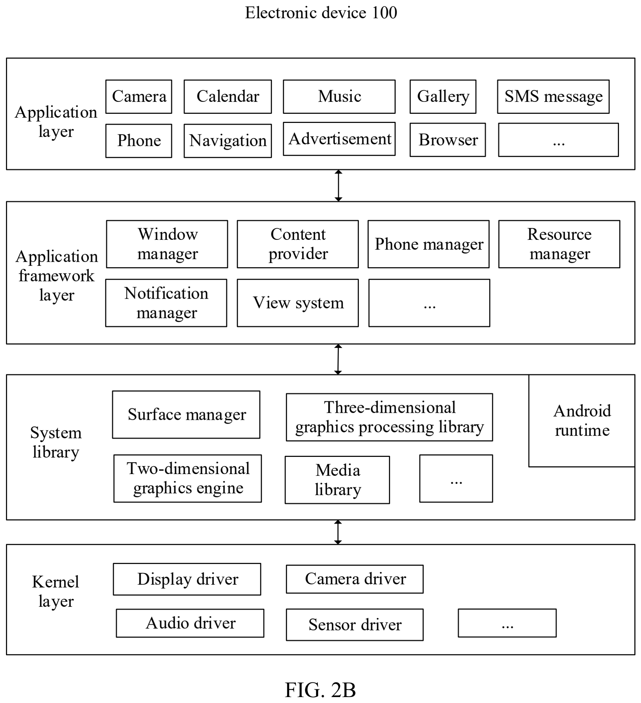

FIG. 2B is an example of a diagram of a software architecture of an electronic device 100.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom. The application layer may include a series of application packages.

As shown in FIG. 2B, the application packages may include applications such as Camera, Gallery, Calendar, Phone, Map, Navigation, Bluetooth, Music, Videos, SMS message, Advertisement, and Browser. Advertisements in this application may be used to provide functions such as dynamic advertisement generation, dynamic content verification, and dynamic content intervention. Advertisements in this application may be an independent application, or may be a service accessed via another application (for example, Browser), or may be a service integrated into another application. This is not limited in this application. The application in this application may alternatively be replaced with other software like an applet or an atomic service.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device 100 vibrates, or the indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to an advertisement scenario.

When the touch sensor 180K receives a touch operation, a corresponding hardware interrupt is sent to the kernel layer. The kernel layer processes the touch operation into an original input event (including information like touch coordinates, a timestamp of the touch operation, and input information associated with the touch operation). The original input event is stored at the kernel layer. The application framework layer obtains the original input event from the kernel layer, and identifies a control corresponding to the input event. For example, the touch operation is a single-tap touch operation, a control corresponding to the single-tap operation is an advertisement generation control of an advertisement application, and input information associated with the touch operation is an advertisement material. The advertisement application invokes an interface of the application framework layer to obtain a static advertisement generated based on the advertisement material. Further, the display driver is controlled by invoking the kernel layer, and the static advertisement is displayed via the display 194.

The following describes a network device in this application by using an example.

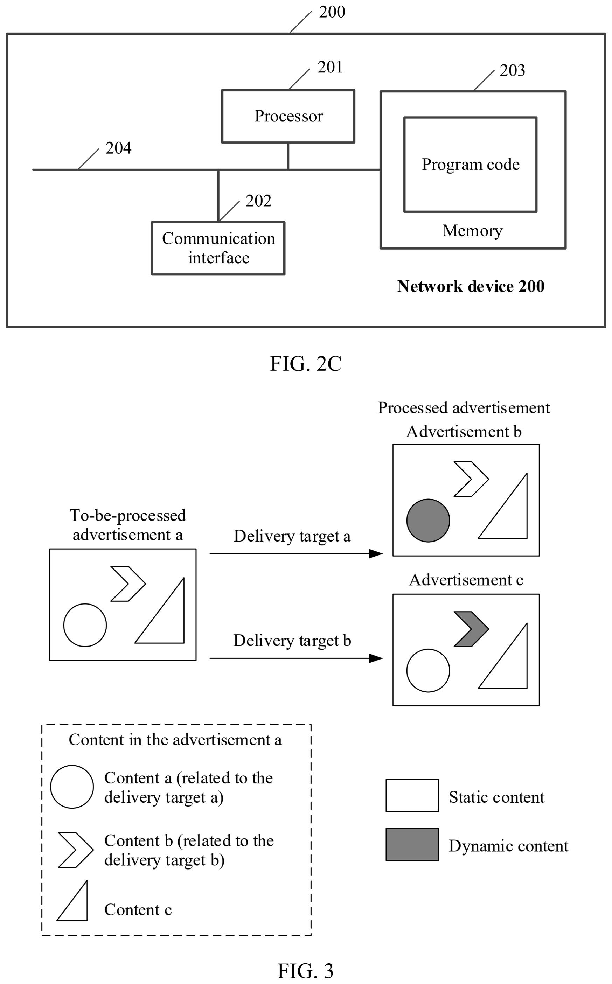

FIG. 2C is an example of a diagram of a hardware structure of a network device 200.

As shown in FIG. 2C, the network device 200 may include one or more processors 201, a communication interface 202, and a memory 203. The processor 201, the communication interface 202, and the memory 203 may be connected through a bus or in another manner. In FIG. 2C, an example in which the processor 201, the communication interface 202, and the memory 203 are connected through a bus 204 is used.

The processor 201 may include one or more general-purpose processors, for example, a central processing unit (central processing unit, CPU). The processor 201 may be configured to run program code associated with the advertisement generation method in embodiments of this application.

The communication interface 202 may be a wired interface (for example, an Ethernet interface) or a wireless interface (for example, a cellular network interface or a wireless local area network interface), and is configured to communicate with another node, for example, communicate with the electronic device 100.

The memory 203 may include a volatile memory (volatile memory), for example, a random access memory (random access memory, RAM). The memory may also include a non-volatile memory (non-volatile memory), for example, a read-only memory (read-only memory, ROM), a flash memory (flash memory), a hard disk drive (hard disk drive, HDD), or a solid state disk (solid state disk, SSD). The memory 203 may further include a combination of the foregoing types of memories. The memory 203 may be configured to store a group of program code, so that the processor 201 invokes the program code stored in the memory 203 to implement the method implemented on the side of the network device 200 in embodiments of this application. In this embodiment of this application, the memory 203 may alternatively be a storage array, or the like. In an implementation, the network device 200 may include at least one server. For example, the network device 200 is a server cluster including a plurality of servers. Any server may be a hardware server, or may be a cloud server, for example, a web server, a background server, an application server, or a download server. For a hardware structure of any server, refer to the hardware structure of the network device 200 shown in FIG. 2C.

The network device 200 shown in FIG. 2C is an example implementation of this embodiment of this application. In actual application, the network device 200 may further include more or fewer components. This is not limited in this application.

The following describes an embodiment of this application, an application scenario in the embodiment, and an example of a user interface in the application scenario.

Embodiment 1: A corresponding dynamic advertisement may be generated based on a static advertisement and a delivery target set by an advertiser. For a same static advertisement, different dynamic advertisements may be correspondingly generated when delivery targets set by the advertiser are different. Content that is in the generated dynamic advertisement and that is associated with the delivery target is dynamic content. For a specific example, refer to FIG. 3. Embodiment 1 may be used to implement a dynamic advertisement generation function in this application.

FIG. 3 is an example of a diagram of dynamic advertisement generation.

As shown in FIG. 3, an advertisement a may include a plurality of pieces of static content, for example, content a, content b, and content c. The content a/content b/content c may be an image or text, the content a is associated with a delivery target a, and the content b is associated with a delivery target b. When a delivery target set by the advertiser is the delivery target a, a dynamic advertisement generated by processing the advertisement a is an advertisement b, the content a that is in the advertisement b and that is associated with the delivery target a is dynamic content, and the content b and the content c are still static content. When the delivery target set by the advertiser is the delivery target b, a dynamic advertisement generated by processing the advertisement a is an advertisement c, the content b that is in the advertisement c and that is associated with the delivery target b is dynamic content, and the content a and the content c are still static content.

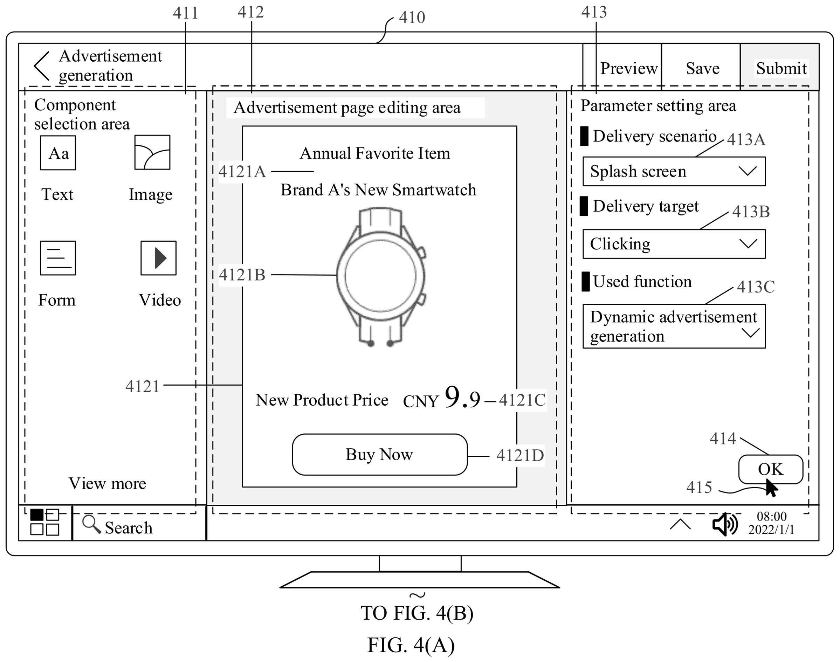

The following describes an application scenario in Embodiment 1 by using FIG. 4(A) to FIG. 6(B) as an example. To-be-processed advertisements d shown in FIG. 4(A) to FIG. 6(B) are the same, but delivery targets are different. Therefore, correspondingly generated dynamic advertisements are also different.

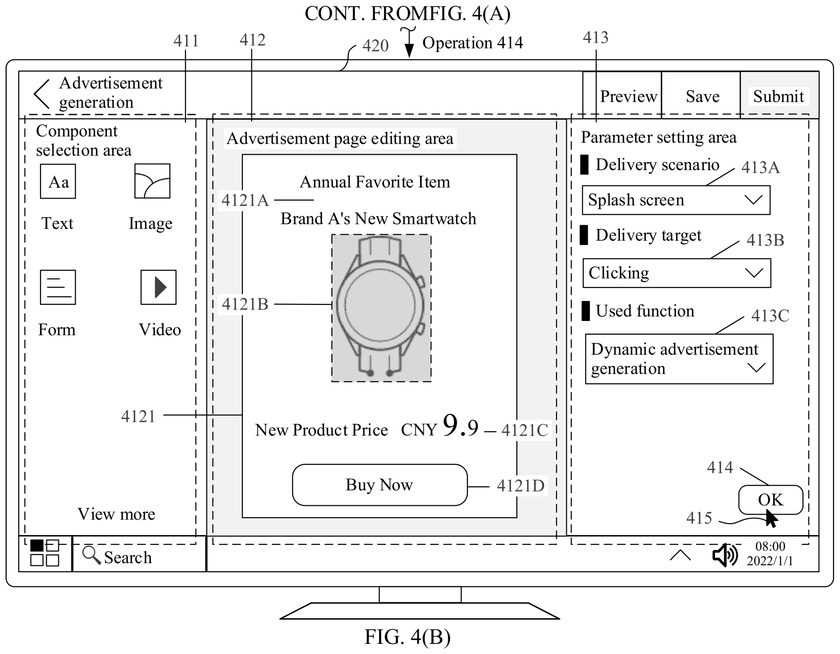

FIG. 4(A) and FIG. 4(B) each illustrate a user interface.

As shown in FIG. 4(A), an electronic device 100 may display a user interface 410 of an advertisement application. The user interface 410 may include a title ("Advertisement generation"), a plurality of function controls (for example, controls of a preview function, a save function, and a submit function), a component selection area 411, an advertisement page editing area 412, and a parameter setting area 413. The component selection area 411 may include a plurality of controls for adding an advertisement material (for example, adding an advertisement material to an advertisement image shown in the advertisement page editing area 412) such as a control for adding a text material, a control for adding an image material, a control for adding a form material, and a control for adding a video material. The component selection area 411 may further include a "View more" control, and the control may be used to obtain more controls for adding other types of materials, controls for adding customized content, and the like. The advertisement page editing area 412 may be used to display advertisement content. The advertisement d displayed in the advertisement page editing area 412 in the user interface 410 may be an advertisement of a smartwatch, and may include a static advertisement image 4121. The advertisement image 4121 may include text 4121A ("Annual Favorite Item" and "Brand A's New Smartwatch"), an image 4121B of the smartwatch, text 4121C ("New Product Price" and "CNY 9.9"), and a "Buy Now" control 4121D. The parameter setting area 413 may include a setting option 413A of a delivery scenario, a setting option 413B of a delivery target, and a setting option 413C of a used function. The setting option 413A may be used to set a delivery scenario of a current advertisement, for example, set to a splash screen or another delivery scenario shown in the user interface 410. The setting option 413B may be used to set a delivery target of a current advertisement, for example, set to clicking or another delivery scenario shown in the user interface 410. The setting option 413C may be used to set a currently used function, for example, set to dynamic advertisement generation shown in the user interface 410, or another function like dynamic content verification and dynamic content intervention. The user interface 410 further includes an OK control 414. The OK control 414 is used to trigger a dynamic advertisement function. To be specific, the advertisement shown in the advertisement page editing area 412 is processed based on dynamic advertisement function parameters set in the parameter setting area 413 to obtain a processing result (for example, verification content of a processed advertisement or the current advertisement). As shown in FIG. 4(A), the electronic device 100 may further display a pointer 415, and the pointer 415 indicates a current to-be-operated location of a mouse in the interface displayed by the electronic device 100. The mouse may be located on the electronic device 100, or an external device of the electronic device 100. The advertiser may control, via the mouse, the pointer 415 to perform operations such as movement, left-click, double-click on the left button, holding down the left mouse button and dragging, and right-click in the interface displayed on the electronic device 100.

In an implementation, the electronic device 100 may receive an input (for example, a left-click of the mouse) of the advertiser for the OK control 414 in the user interface 410. In response to the input, the electronic device 100 may obtain the dynamic advertisement function parameters set in the parameter setting area 413, for example, including a parameter indicating that the delivery scenario is a splash screen, a parameter indicating that the delivery target is clicking, and a parameter indicating that the currently used function is dynamic advertisement generation; and may obtain, based on the function parameters, dynamic advertisement corresponding to the advertisement d shown in the advertisement page editing area 412. In some examples, the electronic device 100 may send the function parameters and the advertisement d (namely, the advertisement image 4121) to a network device 200, so that the network device 200 generates a corresponding dynamic advertisement e based on the function parameters and the advertisement d and returns the dynamic advertisement e, and the electronic device 100 may display the dynamic advertisement e returned by the network device 200. For a specific example, refer to FIG. 4(B). As shown in FIG. 4(B), the electronic device 100 may display a user interface 420 of the advertisement application. The user interface 420 is similar to the user interface 410 shown in FIG. 4(A), and a difference lies in that the advertisement e shown in the advertisement page editing area 412 in the user interface 420 is a dynamic advertisement. The image 4121B in the advertisement image 4121 shown in the user interface 420 is a main image of the current advertisement e. The image 4121B is marked, for example, a detection box is added to an area in which the image 4121B is located, and the detection box is filled with gray, indicating that the image 4121B is dynamic content. The image 4121B is associated with a currently set delivery target (namely, clicking). Dynamicization of the main image (namely, the image 4121B) can improve attractiveness of the advertisement e to a user, so that the user is interested in clicking the advertisement e, to implement the currently set delivery target (namely, clicking). Other content in the advertisement image 4121 is not related to the currently set delivery target, and is still static content.

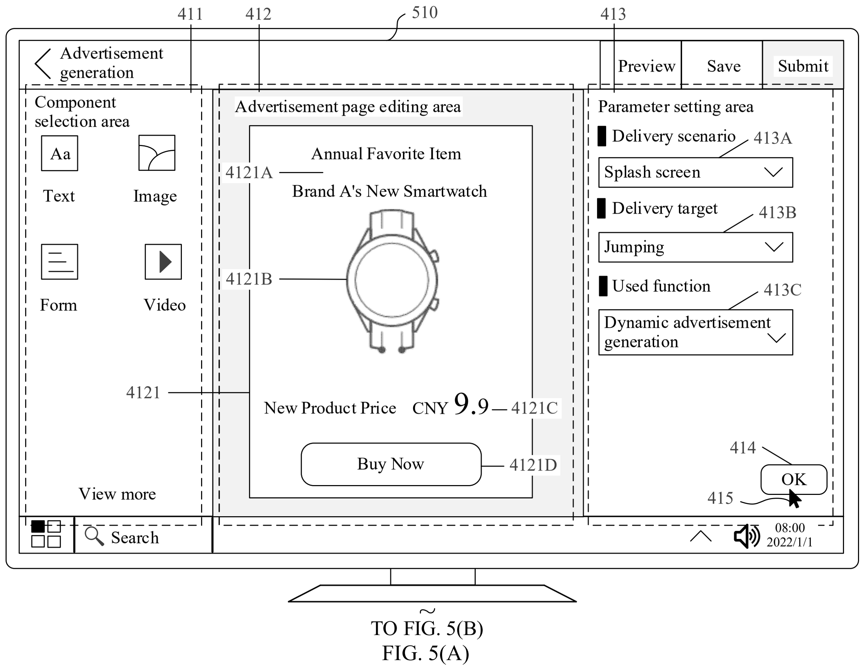

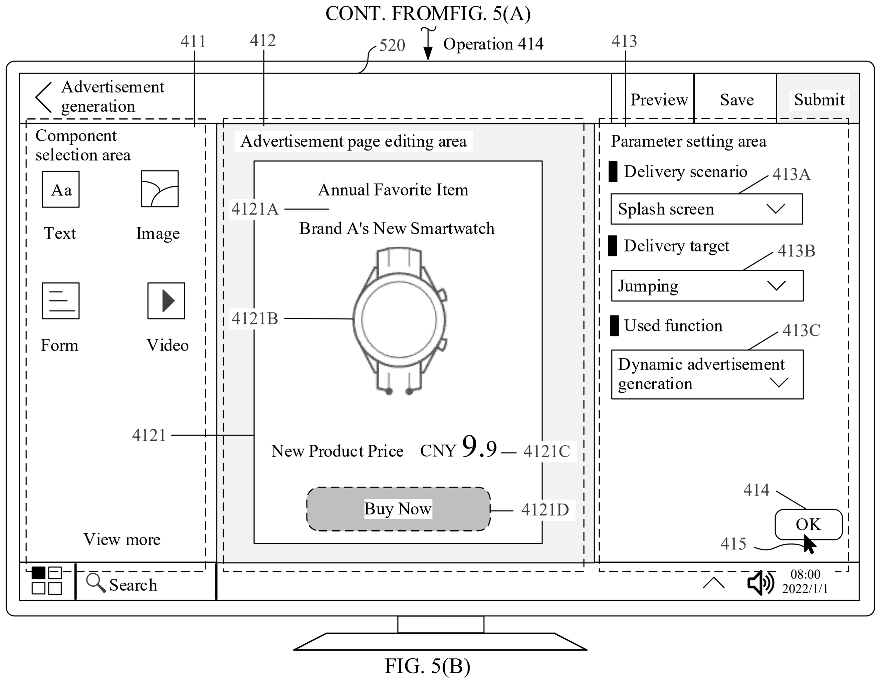

FIG. 5(A) and FIG. 5(B) each illustrate another user interface.

As shown in FIG. 5(A), the electronic device 100 may display a user interface 510 of the advertisement application. The user interface 510 is similar to the user interface 410 shown in FIG. 4(A), and a difference lies in that the setting option 413B included in the parameter setting area 413 in the user interface 510 is jumping, that is, a currently set delivery target is jumping. In an implementation, the electronic device 100 may receive an input (for example, a left-click of the mouse) of the advertiser for the OK control 414 in the user interface 510. In response to the input, the electronic device 100 obtains, based on the function parameters (including a parameter indicating that the delivery target is jumping) set in the parameter setting area 413 in the user interface 510, a dynamic advertisement f corresponding to the advertisement d shown in the advertisement page editing area 412. The electronic device 100 may display the dynamic advertisement f returned by the network device 200. For a specific example, refer to FIG. 5(B). As shown in FIG. 5(B), the electronic device 100 may display a user interface 520 of the advertisement application. The user interface 520 is similar to the user interface 510 shown in FIG. 5(A), and a difference lies in that the advertisement f shown in the advertisement page editing area 412 in the user interface 520 is a dynamic advertisement. The control 4121D in the advertisement image 4121 shown in the user interface 520 may be used to trigger jumping to a related page of the advertisement f (for example, a purchase page of the smartwatch shown in the advertisement f). The control 4121D is marked, for example, a color is set to a specific gray, indicating that the control 4121D is dynamic content. The control 4121D is associated with the currently set delivery target (namely, jumping). Dynamicization of the control 4121D may attract the user to click the control 4121D to jump to the related page of the advertisement f via the control 4121D, so as to implement the currently set delivery target (namely, jumping). Other content in the advertisement image 4121 is not related to the currently set delivery target, and is still static content.

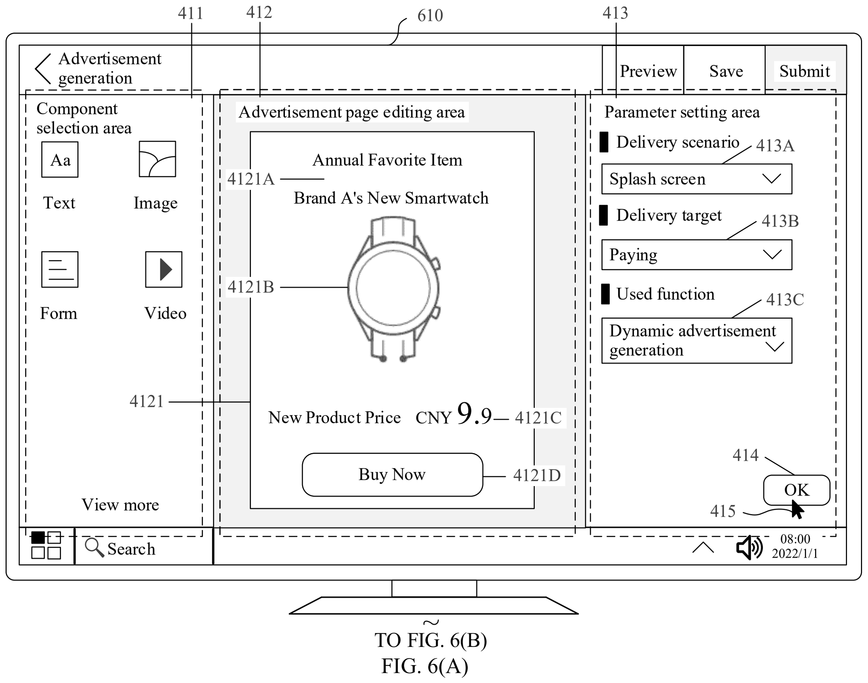

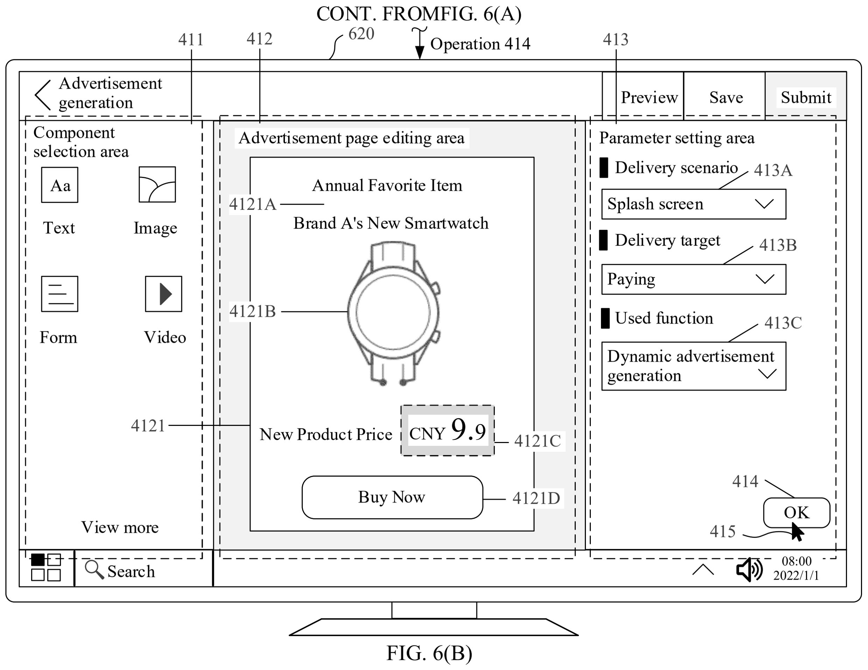

FIG. 6(A) and FIG. 6(B) each illustrate still another user interface.

As shown in FIG. 6(A), the electronic device 100 may display a user interface 610 of the advertisement application. The user interface 610 is similar to the user interface 410 shown in FIG. 4(A), and a difference lies in that the setting option 413B included in the parameter setting area 413 in the user interface 610 is paying, that is, a currently set delivery target is paying. In an implementation, the electronic device 100 may receive an input (for example, a left-click of the mouse) of the advertiser for the OK control 414 in the user interface 610. In response to the input, the electronic device 100 obtains, based on the function parameters (including a parameter indicating that the delivery target is paying) set in the parameter setting area 413 in the user interface 610, a dynamic advertisement g corresponding to the advertisement d shown in the advertisement page editing area 412. The electronic device 100 may display the dynamic advertisement g returned by the network device 200. For a specific example, refer to FIG. 6(B). As shown in FIG. 6(B), the electronic device 100 may display a user interface 620 of the advertisement application. The user interface 620 is similar to the user interface 610 shown in FIG. 6(A), and a difference lies in that the advertisement g shown in the advertisement page editing area 412 in the user interface 620 is a dynamic advertisement. In the advertisement image 4121 shown in the user interface 620, price content "CNY 9.9" in the text 4121C is marked, for example, a detection box is added to an area in which "CNY 9.9" is located, and the detection box is filled with gray, indicating that "CNY 9.9" is dynamic content. The price content "CNY 9.9" in the text 4121C is associated with the currently set delivery target (namely, paying). Dynamicization of the price content "CNY 9.9" may attract the user to pay attention to the price content, so that the user wants to pay for the commodity shown in the current advertisement g, to implement the currently set delivery target (namely, paying). Other content in the advertisement image 4121 is not related to the currently set delivery target, and is still static content.

FIG. 4(A) to FIG. 6(B) are described by using an example in which the advertisement page editing area 412 shows only one advertisement (namely, the advertisement image 4121), and the to-be-processed advertisement is the advertisement by default. In some other examples, the advertisement page editing area 412 may alternatively include N advertisements (N is an integer greater than 1), and the electronic device 100 may default the N advertisements as to-be-processed advertisements. In some other examples, the advertisement page editing area 412 may alternatively include N advertisements. The electronic device 100 may receive a user operation (the user operation is, for example, a touch operation, and the touch operation is, for example, a tap operation, a double-click operation, or a touch and hold operation) performed by the advertiser on M advertisements in the N advertisements, where M is a positive integer less than or equal to N; and determine that the M advertisements are to-be-processed advertisements.

Not limited to the delivery targets and the corresponding (dynamic) advertisement content in the examples in FIG. 4(A) to FIG. 6(B), in some other examples, when the delivery target is set to "clicking", a dynamic advertisement generated for the advertisement d may be the advertisement f shown in FIG. 5(B) (the control 4121D is dynamic content). When the delivery target is set to "paying", a dynamic advertisement generated for the advertisement d may be the advertisement e shown in FIG. 4(B) (the image 4121B is dynamic content). A correspondence/association relationship between the delivery target and the advertisement content is not limited in this application.

Not limited to the foregoing embodiments, in some other embodiments, different dynamic advertisements may be generated for different delivery scenarios, and the generated dynamic advertisement includes dynamic content related to a current delivery scenario. In some other embodiments, different dynamic advertisements may be generated for different delivery targets and/or delivery scenarios, and the generated dynamic advertisement includes dynamic content related to both a current delivery target and a current delivery scenario. This is not limited in this application.

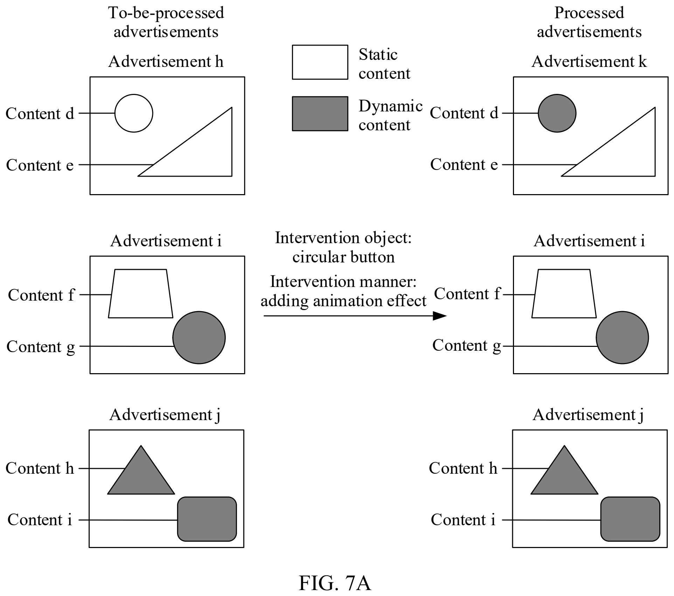

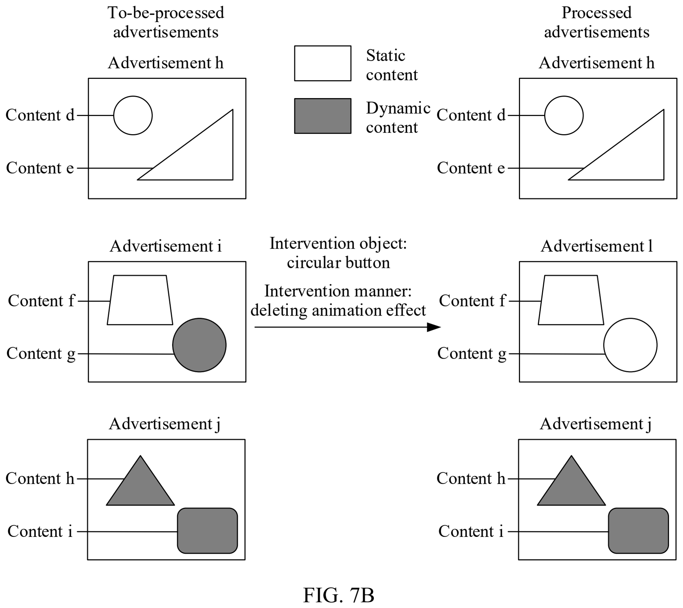

Embodiment 2: Content that is in an advertisement and that is associated with text (which may be referred to as an intervention object) may be intervened based on the text input by an advertiser. An intervention manner may be adding animation effect or deleting animation effect. For a specific example, refer to FIG. 7A and FIG. 7B. Embodiment 2 may be used to implement a dynamic content intervention function in this application.

FIG. 7A illustrates a type of dynamic content intervention.

As shown in FIG. 7A, in to-be-processed advertisements, an advertisement h may include static content d (belonging to a circular button) and content e (whose shape is a triangle), an advertisement i may include static content f (whose shape is a trapezoid) and dynamic content g (belonging to a circular button), and an advertisement j may include dynamic content h (whose shape is a triangle) and content i (whose shape is a rectangle). When an intervention object input by the advertiser is a circular button, and a set intervention manner is adding animation effect, whether to perform intervention may be determined based on a specific situation of advertisement content. When the to-be-processed advertisement is the advertisement h, because the advertisement h includes the static content (namely, the content d) associated with the intervention object, animation effect may be added to the content d, and the content d in an advertisement k obtained by intervening in the advertisement h is dynamic content. When the to-be-processed advertisement is the advertisement i, although the advertisement i includes the content g associated with the intervention object, the content g is already dynamic content. Therefore, the content g in the advertisement i may remain unchanged, and it may be understood that an intervened advertisement is still the advertisement i. When the to-be-processed advertisement is the advertisement j, because the advertisement j does not include advertisement content associated with the intervention object, content in the advertisement j may remain unchanged, and it may be understood as that an intervened advertisement is still the advertisement j.

FIG. 7B illustrates another type of dynamic content intervention.

For descriptions of the to-be-processed advertisements shown in FIG. 7B, refer to the descriptions in FIG. 7A. As shown in FIG. 7B, when an intervention object input by the advertiser is a circular button, and a set intervention manner is deleting animation effect, whether to perform intervention may be determined based on a specific situation of the advertisement content. When the to-be-processed advertisement is the advertisement h, although the advertisement h includes the content d associated with the intervention object, the content d is already static content. Therefore, the content d in the advertisement h may remain unchanged, and it may be understood that an intervened advertisement is still the advertisement h. When the to-be-processed advertisement is the advertisement i, because the advertisement i includes dynamic content (namely, the content g) associated with the intervention object, animation effect may be deleted from the content g, and content g in an advertisement 1 obtained by intervening in the advertisement i is static content. When the to-be-processed advertisement is the advertisement j, because the advertisement j does not include advertisement content associated with the intervention object, content in the advertisement j may remain unchanged, and it may be understood as that an intervened advertisement is still the advertisement j.

It may be understood that, for a same advertisement, when intervention objects set by the advertiser are different, dynamic content in intervened advertisements may be different. For example, when the intervention object is a triangle, and the intervention manner is adding animation effect, an advertisement obtained by intervening in the advertisement h shown in FIG. 7A is different from the advertisement k. In the advertisement obtained through intervention, content e associated with the current intervention object is dynamic content, and the content d is still static content. For a same advertisement, when intervention objects set by the advertiser are different, dynamic content in intervened advertisements may alternatively be the same. For example, when the intervention object is a triangle, and the intervention manner is adding animation effect, because the advertisement i shown in FIG. 7A does not include content associated with the current intervention object, an advertisement obtained through intervention is still the advertisement i. Although the advertisement j shown in FIG. 7A includes the content h associated with the current intervention object, the content h is already dynamic content. Therefore, an advertisement obtained through intervention is still the advertisement j.

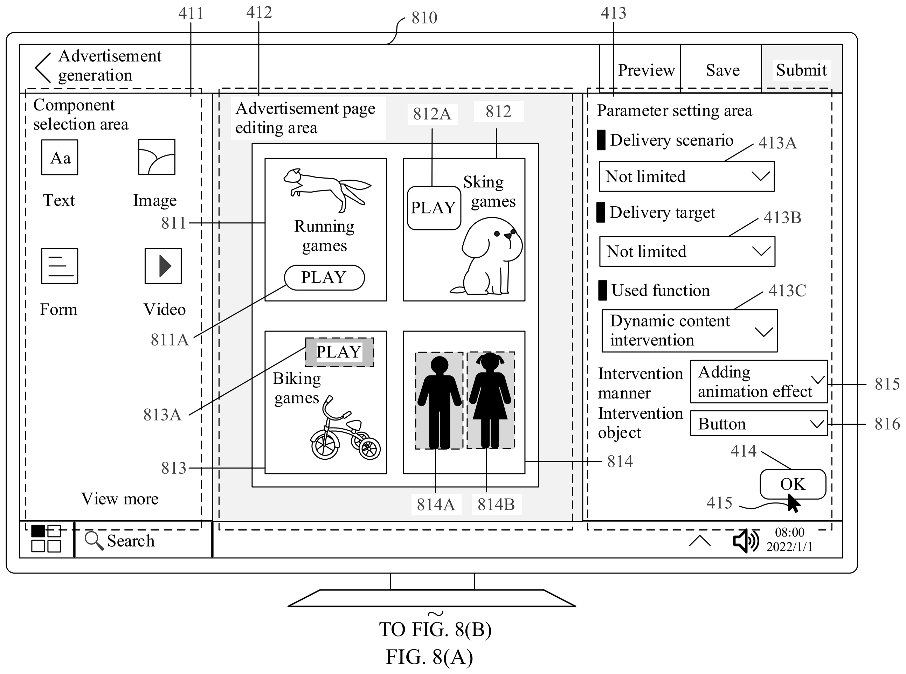

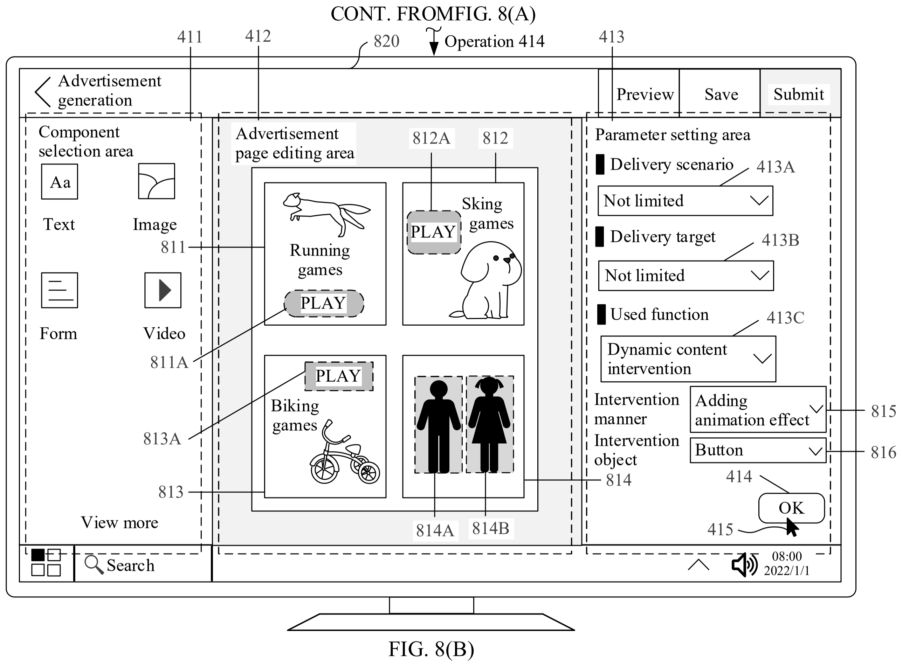

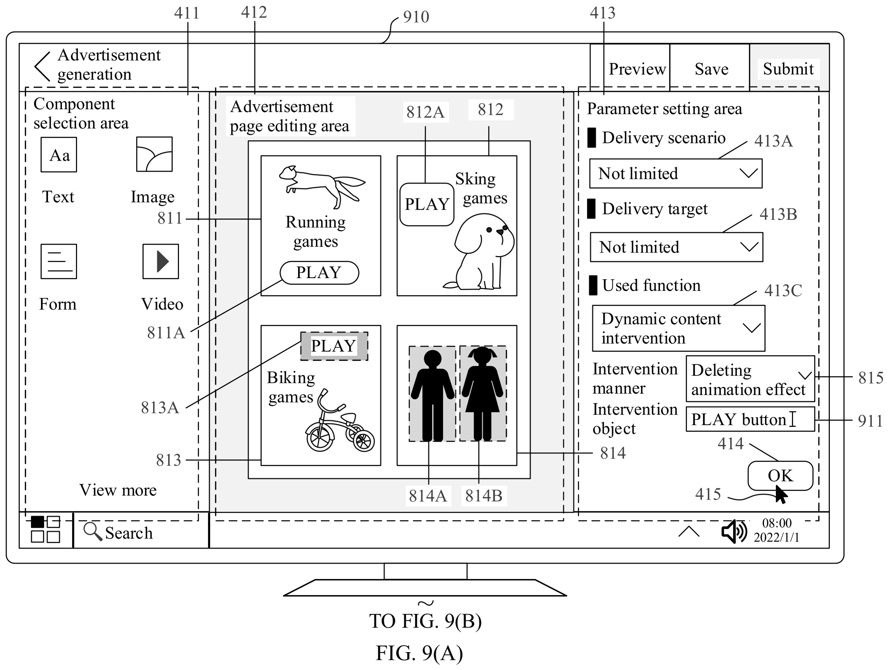

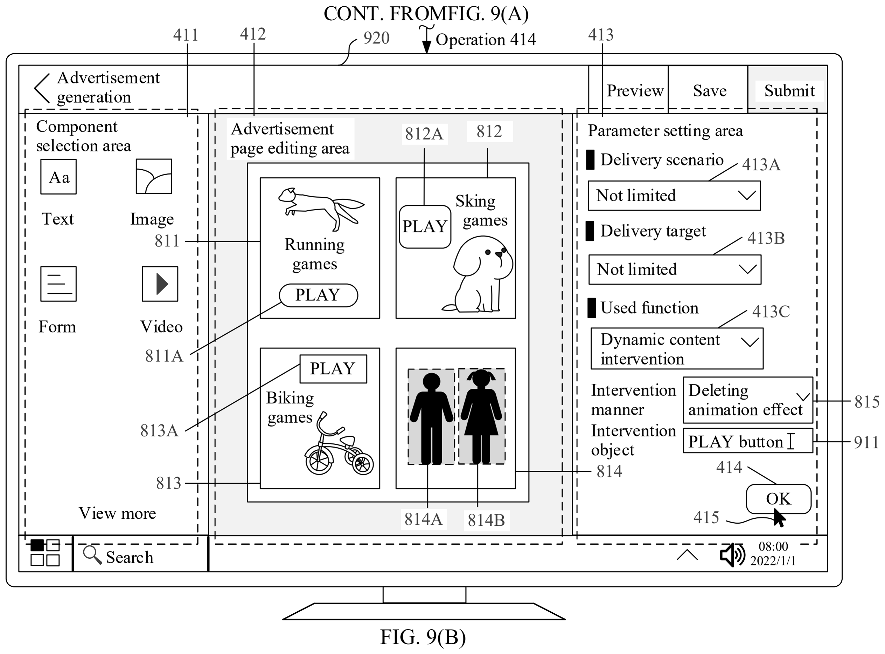

The following describes an application scenario in Embodiment 2 by using FIG. 8(A) to FIG. 9(B) as examples. To-be-processed advertisements shown in FIG. 8(A) to FIG. 9(B) are the same, and intervention objects are similar (in this case, content related to the intervention objects in the advertisements is the same), but intervention manners are different. FIG. 8(A) and FIG. 8(B) are described by using an example in which the intervention manner is adding animation effect, and FIG. 9(A) and FIG. 9(B) are described by using an example in which the intervention manner is deleting animation effect.

FIG. 8(A) and FIG. 8(B) each illustrate yet another user interface.

As shown in FIG. 8(A), the electronic device 100 may display a user interface 810 of an advertisement application. The user interface 810 is similar to the user interface 410 shown in FIG. 4(A), and a difference lies in that advertisements displayed in the advertisement page editing areas 412 are different. The advertisement page editing area 412 in the user interface 810 may be used to display four advertisements (each advertisement includes an advertisement image, but does not include an advertisement copy) of a parkour game: a static advertisement image 811, a static advertisement image 812, a dynamic advertisement image 813, and a dynamic advertisement image 814. The advertisement image 811 includes a button 811A, the advertisement image 812 includes a button 812A, the advertisement image 813 includes a dynamic button 813A, and the advertisement image 814 includes a dynamic image 814A and a dynamic image 814B. Animation effect of different dynamic content may be the same or may be different. For example, animation effect of the image 814A and the image 814B are the same, and animation effect of the button 813A is different from the animation effect of the image 814A and the image 814B. In addition, the setting option 413A in the parameter setting area 413 shown in the user interface 810 is not limited, indicating that a delivery scenario of the current advertisement is not limited. The setting option 413B in the parameter setting area 413 shown in the user interface 810 is not limited, indicating that a delivery target of the current advertisement is not limited. The setting option 413C in the parameter setting area 413 shown in the user interface 810 is dynamic content intervention, indicating that a currently used function is dynamic content intervention. The parameter setting area 413 shown in the user interface 810 further includes an intervention manner setting option 815 and an intervention object setting option 816. The setting option 815 is used to set an intervention manner of the dynamic content intervention function, for example, adding animation effect or deleting animation effect shown in the user interface 810. The setting option 816 is used to set an intervention object of dynamic content intervention. The setting option 816 may provide a plurality of preset intervention objects for the advertiser to select, for example, a plurality of intervention objects such as a button, a link, an image, a form, and an input box. The setting option 816 in the user interface 810 is a button, indicating that a currently set intervention object is the button.

In an implementation, the electronic device 100 may receive an input (for example, a left-click of the mouse) of the advertiser for the OK control 414 in the user interface 810. In response to the input, the electronic device 100 may obtain dynamic advertisement function parameters set in the parameter setting area 413, for example, including a parameter indicating that a currently used function is dynamic content intervention, a parameter indicating that an intervention manner is adding animation effect, and an intervention object (namely, a button). Advertisements obtained by intervening in the four advertisements shown in the advertisement page editing area 412 are obtained based on the function parameters. In some examples, the electronic device 100 may send the function parameters and the four advertisements to the network device 200, so that the network device 200 intervenes in the four advertisements based on the function parameters and returns four advertisements obtained through intervention. The electronic device 100 may display the four advertisements obtained through intervention returned by the network device 200. For a specific example, refer to FIG. 8(B).

As shown in FIG. 8(B), the electronic device 100 may display a user interface 820 of the advertisement application. The user interface 820 is similar to the user interface 810 shown in FIG. 8(A), and a difference lies in that the advertisement image 811 and the advertisement image 812 that are shown in the advertisement page editing area 412 in the user interface 820 are dynamic advertisements. The button 811A (which may also be understood as the button 811A belonging to the intervention object) that is in the advertisement image 811 and that is related to the intervention object is marked, for example, a color is set to a specific gray, indicating that the button 811A is dynamic content. The button 812A that is in the advertisement image 812 and that is related to the intervention object is marked, for example, a color is set to a specific gray, indicating that the button 812A is dynamic content. The advertisement image 813 and the advertisement image 814 remain unchanged.

FIG. 8(A) and FIG. 8(B) are described by using an example in which an intervention object setting manner is that the advertiser selects one intervention object from a plurality of preset intervention objects. In another implementation, the advertiser may alternatively directly input the intervention object. For a specific example, refer to FIG. 9(A) and FIG. 9(B).

FIG. 9(A) and FIG. 9(B) each illustrate still yet another user interface.

As shown in FIG. 9(A), the electronic device 100 may display a user interface 910 of the advertisement application. The user interface 910 is similar to the user interface 810 shown in FIG. 8(A), and a difference lies in that a control for setting an intervention object in the parameter setting area 413 shown in the user interface 910 is not the setting option 816 in the user interface 810, but an input box 911. The input box 911 may be used for the advertiser to input an intervention object, for example, a "PLAY button" shown in the user interface 910. The setting option 815 in the parameter setting area 413 shown in the user interface 910 is deleting animation effect, indicating that a current intervention manner is deleting animation effect. In an implementation, the electronic device 100 may receive an input (for example, a left-click of the mouse) of the advertiser for the OK control 414 in the user interface 910. In response to the input, the electronic device 100 obtains, based on function parameters set in the parameter setting area 413 in the user interface 910, advertisements obtained by intervening in the four advertisements shown in the advertisement page editing area 412, and the electronic device 100 may display the four advertisements obtained through intervention returned by the network device 200. For a specific example, refer to FIG. 9(B).

As shown in FIG. 9(B), the electronic device 100 may display a user interface 920 of the advertisement application. The user interface 920 is similar to the user interface 910 shown in FIG. 9(A), and a difference lies in that the advertisement image 813 shown in the advertisement page editing area 412 in the user interface 920 is a static advertisement. The button 813A related to the intervention object is not marked, indicating that the button 813A is static content. The advertisement image 811, the advertisement image 812, and the advertisement image 814 remain unchanged.

FIG. 8(A) to FIG. 9(B) are described by using an example in which the to-be-processed advertisements are all advertisements (namely, the four advertisements: the advertisement image 811, the advertisement image 812, the advertisement image 813, and the advertisement image 814) shown in the advertisement page editing area 412. In some other examples, the electronic device 100 may alternatively receive a user operation (the user operation is, for example, a touch operation, and the touch operation is, for example, a tap operation, a double-tap operation, or a touch and hold operation) performed by the advertiser on at least one of the four advertisements, and determine the at least one advertisement as a to-be-processed advertisement.

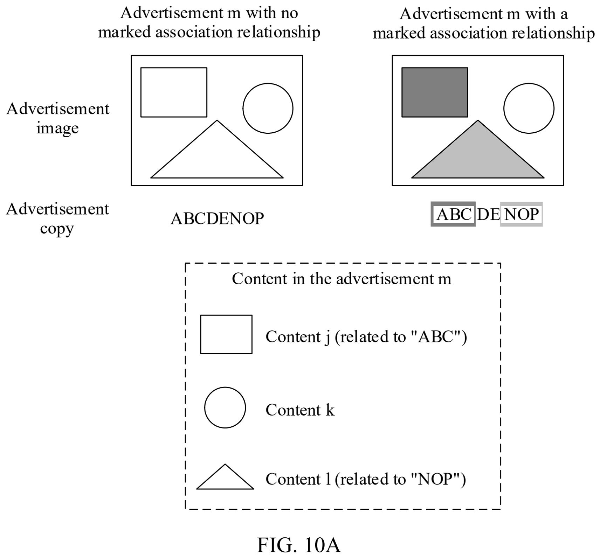

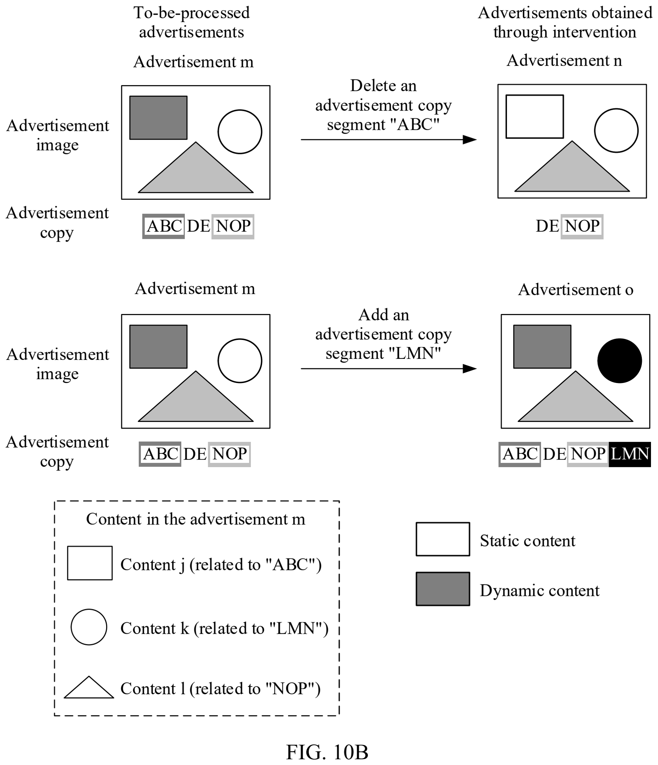

Embodiment 3: An electronic device may mark, in a visual interface, dynamic content and an advertisement copy segment associated with the dynamic content in a dynamic advertisement, which may also be understood as marking an association relationship between the dynamic content and the advertisement copy segment. For a specific example, refer to FIG. 10A. In an implementation, based on the foregoing association relationship, an advertiser may modify an advertisement copy to intervene dynamic content associated with modified content (which may be referred to as a single-point intervention function). For a specific example, refer to FIG. 10B. Embodiment 2 may be used to implement a dynamic content verification function in this application.

FIG. 10A illustrates a type of dynamic content verification.

As shown in FIG. 10A, an advertisement m may include an advertisement image and an advertisement copy (namely, "ABCDENOP"). The advertisement image may include content j, content k, and content 1. The content j and the content 1 are dynamic content, and the content k is dynamic content or static content. The content j is associated with an advertisement copy segment "ABC", and the content 1 is associated with an advertisement copy segment "NOP". The electronic device may mark, in the visual interface, an association relationship between dynamic content and an advertisement copy segment in the advertisement m. FIG. 10A shows an advertisement m with no marked association relationship and an advertisement h with a marked association relationship. As shown in FIG. 10A, in the advertisement m with the marked association relationship, the content j and the associated advertisement copy segment "ABC" are marked in dark gray, and the content 1 and the associated advertisement copy segment "NOP" are marked in light gray. For example, a color of the content j is set to dark gray, a shading background of the advertisement copy segment "ABC" is set to dark gray, a color of the content 1 is set to light gray, and a shading background of the advertisement copy segment "NOP" is set to light gray. Optionally, static content (for example, the content e is static content) is not marked. Optionally, dynamic content (for example, the content e is dynamic content) that is not associated with an advertisement copy segment is not marked.

FIG. 10B illustrates another type of dynamic content verification. FIG. 10B is illustrated by using an example in which a filling color of static content is white and a filling color of dynamic content is another color.

As shown in FIG. 10B, the advertisement m may include the advertisement image and the advertisement copy (namely, "ABCDENOP"). The content j and the content 1 in the advertisement image are dynamic content, and the content k is static content. The to-be-processed advertisement m shown in FIG. 10B is the advertisement m with the marked association relationship. Therefore, both the content j and the associated advertisement copy segment "ABC" are marked in dark gray, the content 1 and the associated advertisement copy segment "NOP" are marked in light gray, and the static content (namely, the content k) is not marked. The advertiser may implement the single-point intervention function of dynamic content verification for the advertisement m. In some examples, when deleting the advertisement copy segment "ABC" from the advertisement copy of the advertisement m, the advertiser may delete animation effect from the content j that is in the advertisement m and that is associated with the currently deleted content "ABC". In this case, in an advertisement n obtained through intervention, an advertisement copy is "DENOP", and the content j in the advertisement image is not marked, indicating that the content j is static content. In some other examples, when the advertiser adds an advertisement copy segment "LMN" to the advertisement copy of the advertisement m, animation effect may be added to the content k that is in the advertisement m and that is associated with the currently added content "LMN". In this case, in an advertisement o obtained through intervention, an advertisement copy is "ABCDENOPLMN", the content k in the advertisement image is dynamic content, and the content k and the associated advertisement copy segment "LMN" are marked in black. For example, a color of the content e is set to black, and a shading background of the advertisement copy segment "LMN" is set to black. Optionally, to distinguish between the added advertisement copy segment "LMN" and another advertisement copy segment, a font color of the advertisement copy segment "LMN" may be set to white (a font color of the another advertisement copy segment is black). FIG. 10B is described by using an example in which the advertisement m includes the advertisement copy. In some other examples, the advertisement m may alternatively not include the advertisement copy, and the advertiser may add the advertisement copy to the advertisement m, for example, "LMN". In this case, animation effect may also be added to the content k that is in the advertisement m and that is associated with the currently added advertisement copy "LMN". An advertisement obtained through intervention is similar to the advertisement o, and advertisement images may be the same. A difference lies in that the advertisement copy is "LMN" in the current advertisement obtained through intervention.

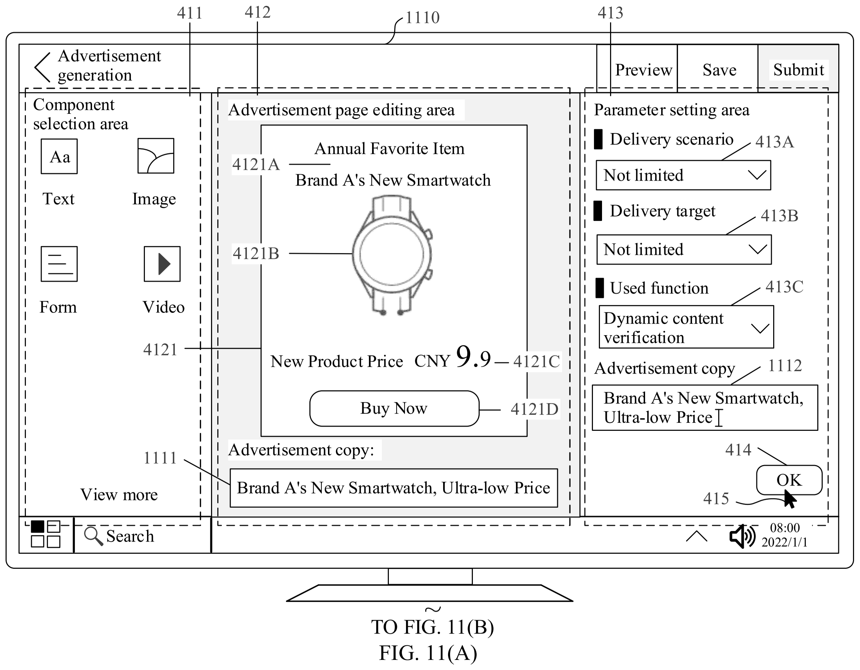

The following describes an application scenario in Embodiment 3 by using FIG. 11(A) to FIG. 13 as an example.

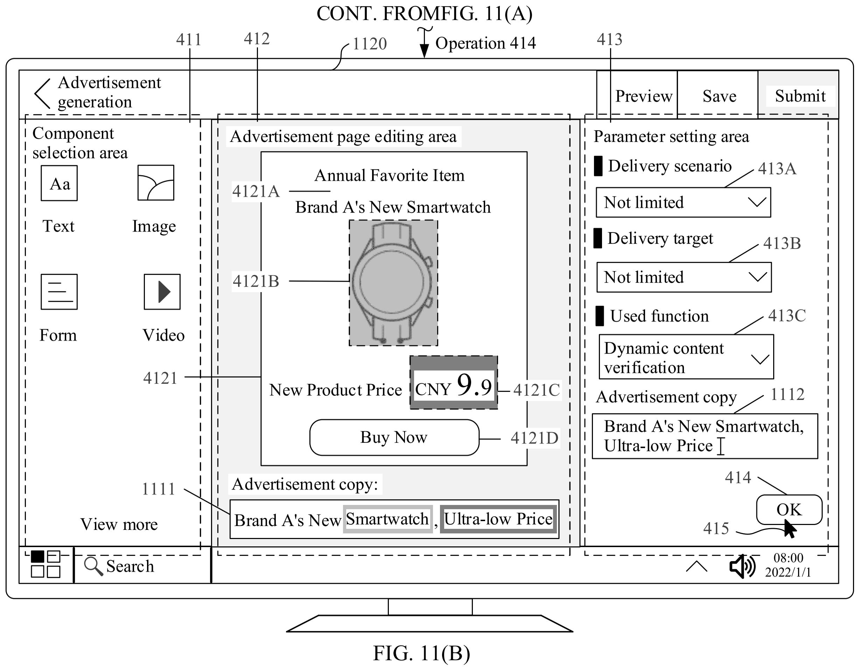

FIG. 11(A) and FIG. 11(B) each illustrate a further user interface.

As shown in FIG. 11(A), the electronic device 100 may display a user interface 1110 of the advertisement application. The user interface 1110 is similar to the user interface 410 shown in FIG. 4(A), and a difference lies in that the advertisement d shown in the advertisement page editing area 412 not only includes the advertisement image 4121, but also includes a corresponding advertisement copy 1111. The advertisement copy 1111 may include characters "Brand A's New Smartwatch, Ultra-low Price". In addition, the setting option 413A in the parameter setting area 413 shown in the user interface 1110 is not limited, indicating that a delivery scenario of a current advertisement is not limited. The setting option 413B in the parameter setting area 413 shown in the user interface 1110 is not limited, indicating that a delivery target of the current advertisement is not limited. The setting option 413C in the parameter setting area 413 shown in the user interface 1110 is dynamic content verification, indicating that a currently used function is dynamic content verification. The parameter setting area 413 shown in the user interface 1110 further includes a text box 1112 of the advertisement copy. The text box 1112 displays content of the advertisement copy 1111, and the text box 1112 may be used by the advertiser to modify the content of the advertisement copy 1111.

In an implementation, the electronic device 100 may receive an input (for example, a left-click of the mouse) of the advertiser for the OK control 414 in the user interface 1110. In response to the input, the electronic device 100 may obtain dynamic advertisement function parameters set in the parameter setting area 413, for example, including a parameter indicating that a currently used function is dynamic content verification. Verification content (that is, an association relationship between dynamic content and an advertisement copy segment) of the advertisement d shown in the advertisement page editing area 412 is obtained based on the function parameters. In some examples, the electronic device 100 may send, to a network device 200, the advertisement d (namely, the advertisement image 4121 and the advertisement copy 1111) shown in the advertisement page editing area 412 and the function parameters, so that the network device 200 obtains and returns the association relationship between the dynamic content and the advertisement copy segment in the advertisement d, and the electronic device 100 may mark the association relationship in the advertisement page editing area 412. For a specific example, refer to FIG. 11(B). As shown in FIG. 11(B), the electronic device 100 may display a user interface 1120 of the advertisement application. The user interface 1120 is similar to the user interface 1110 shown in FIG. 11(A), and a difference lies in that in the advertisement page editing area 412 included in the user interface 1120, an image 4121B of the smartwatch in the advertisement image 4121 and a segment "Smartwatch" in the advertisement copy 1111 are marked in light gray, indicating that the dynamic content image 4121B is associated with the advertisement copy segment "Smartwatch". There is a detection box in an area in which the image 4121B is located, the detection box is filled with light gray, and a shading background of the advertisement copy segment "Smartwatch" is set to light gray. "CNY 9.9" in text 4121C shown in the advertisement image 4121 and a segment "Ultra-low Price" in the advertisement copy 1111 are marked in dark gray, indicating that the dynamic content "CNY 9.9" is associated with the advertisement copy segment "Ultra-low Price". There is a detection box in an area in which "CNY 9.9" is located, the detection box is filled with dark gray, and a shading background of the advertisement copy segment "Ultra-low Price" is set to dark gray. In the advertisement page editing area 412 included in the user interface 1120, animation effect of different dynamic content may be the same or may be different. For example, although the image 4121B and "CNY 9.9" are marked by different colors, the animation effect may be the same.

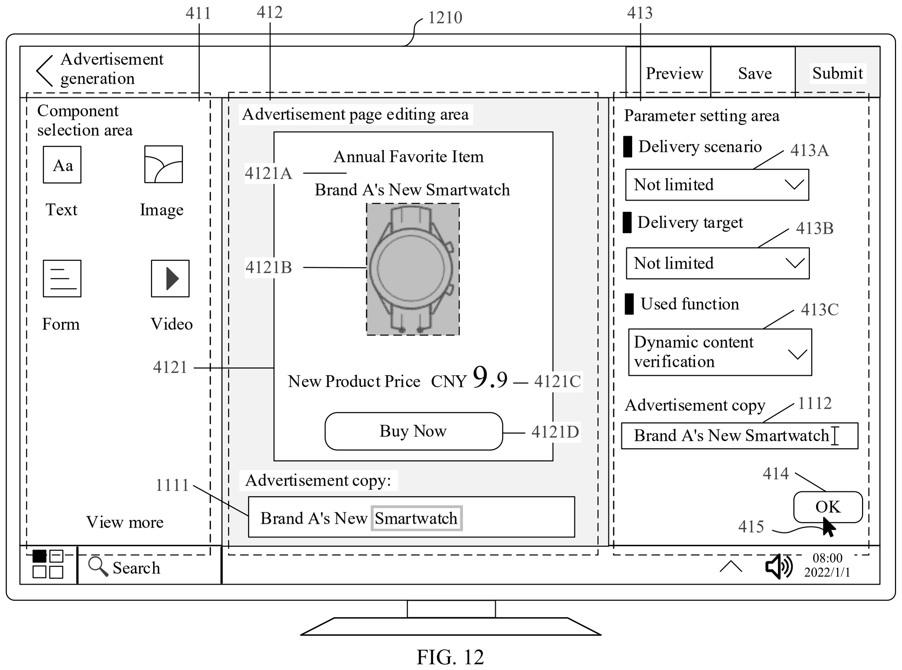

In an implementation, the electronic device 100 may receive an input (for example, including a left-click of the mouse and a delete operation) of the advertiser for the text box 1112 in the user interface 1120 shown in FIG. 11(B). In response to the input, characters ", Ultra-low Price" in the text box 1112 is deleted (that is, modified content is ", Ultra-low Price"). Then, the electronic device 100 may receive an input (for example, a left-click of the mouse) of the advertiser for the OK control 414 in the user interface 1120. In response to the input, the dynamic advertisement function parameters set in the parameter setting area 413, for example, including a parameter indicating that a currently used function is dynamic content verification, a parameter indicating that an intervention manner is deleting animation effect, and modified content are obtained. An advertisement obtained by single-point intervening (for example, deleting animation effect) in the advertisement d is obtained based on the function parameters. In some examples, the electronic device 100 may send the function parameters and information (for example, identification information or the advertisement image 4121) of the advertisement d to the network device 200, so that the network device 200 intervenes, based on the function parameters, the content 4121C that is in the advertisement image 4121 and that is associated with the modified content, and returns an advertisement image obtained through single-point intervention. The electronic device 100 may display the advertisement image obtained through single-point intervention returned by the network device 200. For a specific example, refer to FIG. 12. The parameter indicating the intervention manner may be determined based on a manner of modifying the advertisement copy by the advertiser. When the modification manner is deletion, the intervention manner is deleting animation effect. When the modification manner is addition, the intervention manner is adding animation effect. The parameter may alternatively be replaced with a parameter indicating a manner of modifying the advertisement copy.

As shown in FIG. 12, the electronic device 100 may display a user interface 1210 of the advertisement application. The user interface 1210 is similar to the user interface 1120 shown in FIG. 11(B), and a difference lies in that both the advertisement copy 1111 and the text box 1112 in the user interface 1210 are advertisement copies modified by the advertiser, namely, "Brand A's New Smartwatch". In addition, the advertisement image 4121 in the advertisement page editing area 412 shown in the user interface 1210 is an advertisement image obtained through single-point intervention. Content "CNY 9.9" associated with the modified content (namely, ", Ultra-low Price") is not marked, indicating the content is static content.

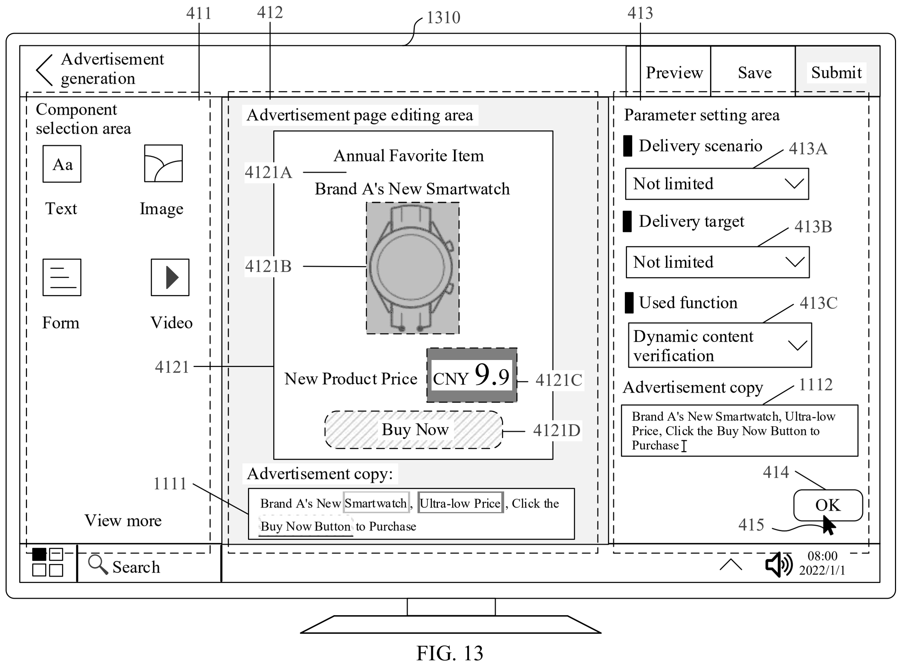

In another implementation, the electronic device 100 may receive an input (for example, including a left-click of the mouse and a delete operation) of the advertiser for the text box 1112 in the user interface 1120 shown in FIG. 11(B). In response to the input, characters ", Click the Buy Now Button to Purchase" are added to the text box 1112 (that is, modified content is ", Click the Buy Now button to Purchase"). Then, the electronic device 100 may receive an input (for example, a left-click of the mouse) of the advertiser for the OK control 414 in the user interface 1120. In response to the input, the dynamic advertisement function parameters set in the parameter setting area 413, for example, including a parameter indicating that a currently used function is dynamic content verification, a parameter indicating that an intervention manner is adding animation effect, and modified content are obtained. An advertisement obtained by single-point intervening (for example, adding animation effect) in the advertisement d is obtained based on the function parameters. In some examples, the electronic device 100 may send the function parameters and the advertisement image 4121 of the advertisement d to the network device 200, so that the network device 200 intervenes, based on the function parameters, a control 4121D that is in the advertisement image 4121 and that is associated with the modified content, and returns an advertisement image obtained through single-point intervention. The electronic device 100 may display the advertisement image obtained through single-point intervention returned by the network device 200. For a specific example, refer to FIG. 13.

As shown in FIG. 13, the electronic device 100 may display a user interface 1310 of the advertisement application. The user interface 1310 is similar to the user interface 1120 shown in FIG. 11(B). A difference lies in that both an advertisement copy 1111 and a text box 1112 in the user interface 1310 are advertisement copies modified by the advertiser, namely, "Brand A's New Smartwatch, Ultra-low Price, Click the Buy Now Button to Purchase". In addition, the advertisement image 4121 in the advertisement page editing area 412 shown in the user interface 1210 is an advertisement image obtained through single-point intervention, and the control 4121D associated with the modified content (namely, ", Click the Buy Now Button to Purchase") is marked, indicating that the control 4121D is dynamic content. In the advertisement page editing area 412 shown in the user interface 1210, both the control 4121D in the advertisement image 4121 and a segment "Buy Now Button" in the advertisement copy 1111 are marked with a gray diagonal stripe pattern, indicating that the dynamic content control 4121D is associated with the advertisement copy segment "Buy Now Button". The control 4121D is configured with a detection box, and the detection box is filled with a gray diagonal stripe pattern. The advertisement copy segment "Buy Now Button" is configured with a shading background, and the shading background is filled with a gray diagonal stripe pattern.

Not limited to the foregoing implementation in which the advertiser adds text to the advertisement copy, in another implementation, the advertiser may alternatively add an advertisement copy to an advertisement, and the electronic device 100 may display an advertisement in which animation effect is added to content related to the added advertisement copy in the advertisement. In some examples, the electronic device 100 may display the advertisement d in the user interface 410 shown in FIG. 4(A). It is assumed that content included in the advertisement d displayed in the user interface 410 is static content, and the electronic device 100 may receive an input operation performed by the advertiser for the advertisement d. The input operation is used to input an advertisement copy "Brand A's New Smartwatch, Ultra-low Price". The electronic device 100 may obtain, based on the advertisement copy, an advertisement in which animation effect is added to static content related to the advertisement copy in the advertisement d. For example, the electronic device 100 may send function parameters (for example, including the added advertisement copy and a parameter indicating that an intervention manner is adding animation effect) and the advertisement d (namely, the advertisement image 4121) to the network device 200, so that the network device 200 intervenes, based on the function parameters, the image 4121B and the text 4121C that are in the advertisement image 4121 and that are associated with the added advertisement copy, and returns an advertisement obtained through intervention. The electronic device 100 may display the advertisement in which the animation effect is added, for example, display the user interface 1110 (dynamic content in the advertisement image 4121 is not marked) shown in FIG. 11(A), or display the user interface 1120 (dynamic content in the advertisement image 4121 is marked) shown in FIG. 11(B).

FIG. 11(A) to FIG. 13 are described by using an example in which the advertisement page editing area 412 shows only one advertisement (namely, the advertisement d), and the dynamic content verification function is performed on the advertisement by default. In some other examples, the advertisement page editing area 412 may alternatively include N advertisements (N is an integer greater than 1), and the electronic device 100 may perform the dynamic content verification function on the N advertisements by default. In some other examples, the advertisement page editing area 412 may alternatively include N advertisements, and the electronic device 100 may receive a user operation (the user operation is, for example, a touch operation, and the touch operation is, for example, a tap operation, a double-tap operation, or a touch and hold operation) performed by the advertiser on M advertisements in the N advertisements, where M is a positive integer less than or equal to N, and determine that the M advertisements are advertisements on which the dynamic content verification function is performed.

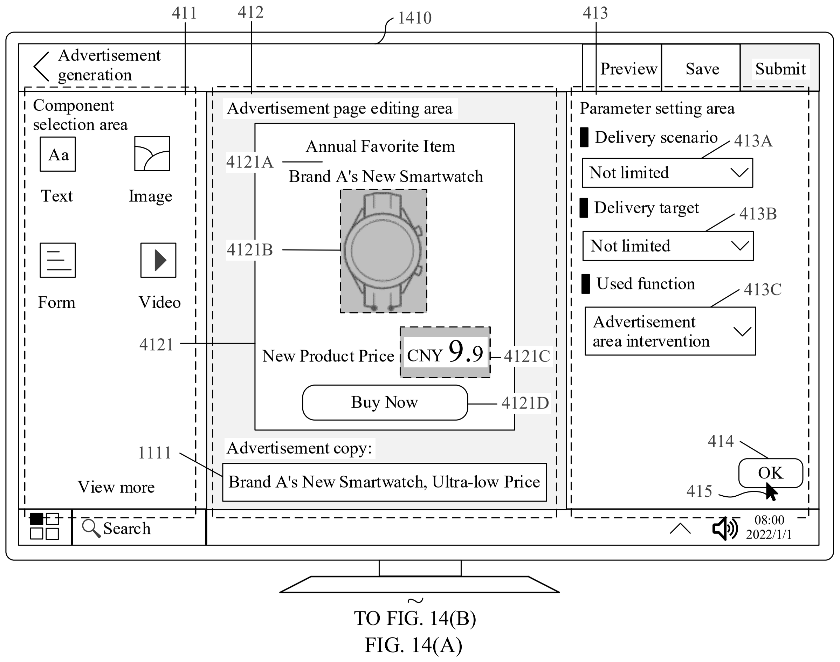

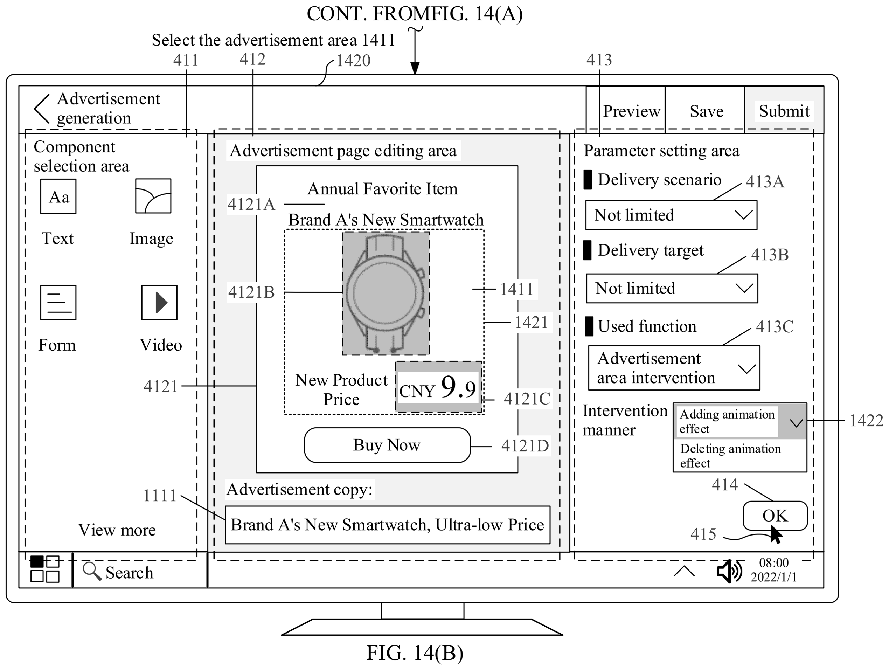

Not limited to the foregoing embodiments, in some other embodiments, the advertiser may alternatively directly interactively select an advertisement area in a visual interface, and intervene advertisement content in the advertisement area. For a specific example, refer to FIG. 14(A) and FIG. 14(B).

FIG. 14(A) and FIG. 14(B) each illustrate a still yet further user interface.

As shown in FIG. 14(A), the electronic device 100 may display a user interface 1410 of the advertisement application. The user interface 1410 is similar to the user interface 410 shown in FIG. 4(A), and a difference lies in that the advertisement d shown in the advertisement page editing area 412 not only includes the advertisement image 4121, but also includes a corresponding advertisement copy 1111. The advertisement copy 1111 may include characters "Brand A's New Smartwatch, Ultra-low Price". In addition, in the advertisement page editing area 412 shown in the user interface 1410, the image 4121B and "CNY 9.9" in the advertisement image 4121 are marked, for example, marked by a gray detection box, indicating that the image 4121B and "CNY 9.9" are dynamic content. Animation effect of different dynamic content may be the same or may be different. Both the setting option 413A and the setting option 413B in the parameter setting area 413 shown in the user interface 1410 are not limited, indicating that a delivery scenario and a delivery target of the current advertisement are not limited. The setting option 413C in the parameter setting area 413 shown in the user interface 1410 is advertisement area intervention, indicating that a currently used function is advertisement area intervention. In this case, the advertiser may intervene advertisement content in the advertisement area by selecting an advertisement area in the advertisement page editing area 412.

In an implementation, the electronic device 100 may receive an input of the advertiser for an advertisement area 1411 in the advertisement page editing area 412 shown in the user interface 1410. For example, the input includes touching and holding a left mouse button in an upper left corner of the advertisement area 1411 and sliding the left mouse button to a lower right corner. In response to the input, the electronic device 100 may select and display the advertisement area 1411 in the advertisement page editing area 412. For a specific example, refer to FIG. 14(B).

As shown in FIG. 14(B), the electronic device 100 may display a user interface 1420 of the advertisement application. The user interface 1420 is similar to the user interface 1410 shown in FIG. 14(A), and a difference lies in that a dashed-line box 1421 is further displayed in the advertisement image 4121 shown in the user interface 1420, indicating that an area (namely, the advertisement area 1411) in the dashed-line box 1421 is selected. The parameter setting area 413 shown in the user interface 1420 further includes a setting option 1422. The setting option 1422 is used to set an intervention manner for the selected area (namely, the advertisement area 1411), for example, adding or deleting animation effect.

In an implementation, the electronic device 100 may receive an input for the setting option 1422 in the user interface 1420. In response to the input, the setting option 1422 is set to deleting animation effect. Then, an input (for example, a left-click of the mouse) for the OK control 414 in the user interface 1420 is received. In response to the input, an advertisement image obtained by intervening in the advertisement area 1411 in the advertisement image 4121 is obtained based on function parameters (for example, including a parameter indicating that the intervention manner is deleting animation effect) set in the parameter setting area 413. In some examples, the electronic device 100 may send the function parameters and the advertisement image 4121 (further including a parameter indicating the advertisement area 1411) to the network device 200, so that the network device 200 intervenes in content in the advertisement area 1411 in the advertisement image 4121 based on the function parameters, and returns an advertisement image obtained through intervention. The electronic device 100 may display the advertisement image obtained through intervention returned by the network device 200. In comparison with the advertisement image 4121 (namely, the advertisement image before intervention) in the user interface 1410 shown in FIG. 14(A), in the advertisement image obtained through intervention, the image 4121B and "CNY 9.9" are not marked, indicating that the image 4121B and "CNY 9.9" are static content.

In another implementation, the electronic device 100 may receive an input for the setting option 1422 in the user interface 1420. In response to the input, the setting option 1422 is set to adding animation effect. Then, an input (for example, a left-click of the mouse) for the OK control 414 in the user interface 1420 is received. In response to the input, an advertisement image obtained by intervening in the advertisement area 1411 in the advertisement image 4121 is obtained based on function parameters (for example, including a parameter indicating that an intervention manner is adding animation effect) set in the parameter setting area 413. The electronic device 100 may display the advertisement image obtained through intervention. In comparison with the advertisement image 4121 (namely, the advertisement image before intervention) in the user interface 1410 shown in FIG. 14(A), in the advertisement image obtained through intervention, "New Product Price" in the text 4121C is marked, for example, marked by a gray detection box, indicating that "New Product Price" is dynamic content.

The advertisement generation method in this application is described based on the foregoing embodiments. The method may be applied to the advertisement generation system 10 shown in FIG. 1A. The method may be applied to the advertisement generation system 10 shown in FIG. 1B.

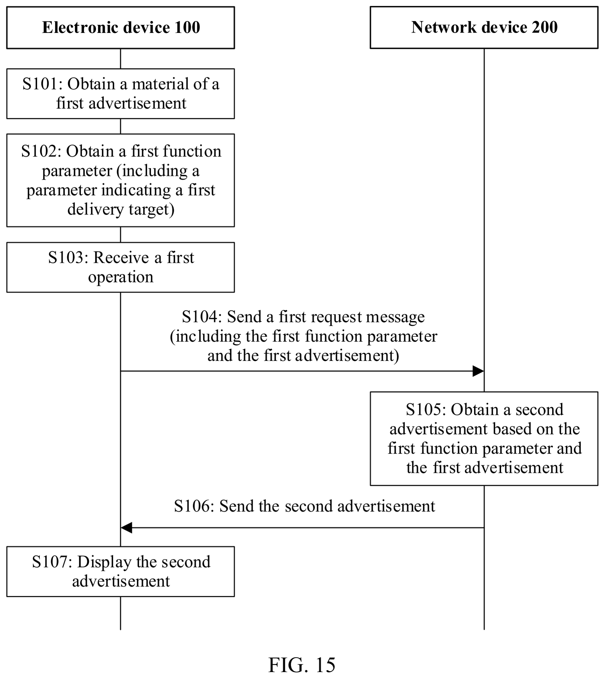

FIG. 15 is a schematic flowchart of an advertisement generation method according to an embodiment of this application. The method may be used to implement Embodiment 1. The method may include but is not limited to the following steps.

S101: An electronic device 100 obtains a material of a first advertisement.

In an implementation, the electronic device 100 may generate the first advertisement based on the material of the first advertisement and display the first advertisement. For example, the electronic device 100 receives an input of an advertiser for the component selection area 411 in the user interface 410 shown in FIG. 4(A), to obtain materials such as text, an image, and a control. In addition, the electronic device 100 generates the first advertisement based on these materials, and the electronic device 100 may display the generated first advertisement (namely, the advertisement d) in the advertisement page editing area 412 in the user interface 410. For an example of the material of the first advertisement, refer to the example of the advertisement material in FIG. 1B. In an implementation, the first advertisement is a static advertisement, and an advertisement image of the first advertisement includes static content but does not include dynamic content. For a specific example, refer to the advertisement d displayed in the advertisement page editing area 412 in the user interface 410 shown in FIG. 4(A).

In an implementation, the first advertisement may include one or more advertisements. For ease of description, the following embodiment is described by using an example in which the first advertisement is any advertisement (including one advertisement image and optionally one advertisement copy) obtained by the electronic device 100.

S102: The electronic device 100 obtains a first function parameter (including a parameter indicating a first delivery target).

In an implementation, the first function parameter may include a parameter 1 indicating the first delivery target, a parameter 2 indicating that a currently used function is dynamic advertisement generation, and optionally, a parameter indicating a delivery scenario. For example, the advertiser may input the first function parameter based on the parameter setting area 413 in the user interface 410 shown in FIG. 4(A). The first function parameter includes a parameter indicating that a delivery scenario is a splash screen, a parameter indicating that a delivery target is clicking, and a parameter indicating that a currently used function is dynamic advertisement generation.

A sequence of S101 and S102 is not limited.

S103: The electronic device 100 receives a first operation.

In an implementation, the electronic device 100 may receive the first operation input by the advertiser, for example, an input for the OK control 414 in the user interface 410 shown in FIG. 4(A). The first operation may be used to trigger implementation of the dynamic advertisement generation function. The electronic device 100 may perform S104 in response to the first operation. S104: The electronic device 100 sends a first request message (including the first function parameter and the first advertisement) to a network device 200.

In an implementation, the first request message may be used to request to obtain a dynamic advertisement corresponding to the first advertisement.

S105: The network device 200 obtains a second advertisement based on the first function parameter and the first advertisement.

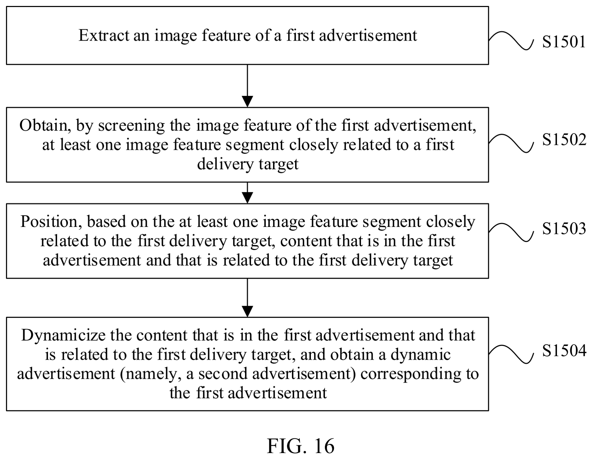

In an implementation, the network device 200 may determine, based on the parameter 2 in the first function parameter, a process of implementing dynamic advertisement generation. When implementing the process, the network device 200 may generate the corresponding dynamic advertisement (namely, the second advertisement) based on the parameter 1 (indicating the first delivery target) in the first function parameter and the first advertisement. In some examples, the network device 200 may position content that is in the advertisement image of the first advertisement and that is related to the first delivery target, and dynamicize the content, to obtain the second advertisement. For a specific implementation process, refer to FIG. 16. Details are not described herein.

The second advertisement includes dynamic content related to the first delivery target. Optionally, the first advertisement includes content 1 related to the first delivery target, and the content 1 is static content. The second advertisement also includes content 1 related to the first delivery target, but the content 1 is dynamic content. In some examples, the first advertisement is the advertisement image 4121 in the user interface 410 shown in FIG. 4(A). When the first delivery target is clicking represented by the setting option 413B shown in FIG. 4(A), the image 4121B that is in the first advertisement and that is related to the first delivery target is static content, the second advertisement corresponding to the first advertisement is the advertisement image 4121 in the user interface 420 shown in FIG. 4(B), and the image 4121B that is in the second advertisement and that is related to the first delivery target is dynamic content. When the first delivery target is jumping represented by the setting option 413B shown in FIG. 5(A), the control 4121D in the first advertisement is related to the first delivery target and is static content, the second advertisement corresponding to the first advertisement is the advertisement image 4121 in the user interface 520 shown in FIG. 5(B), and the control 4121D in the second advertisement is dynamic content. When the first delivery target is paying represented by the setting option 413B shown in FIG. 6(A), "CNY 9.9" in the text 4121C shown in the first advertisement is related to the first delivery target and is static content, the second advertisement corresponding to the first advertisement is the advertisement image 4121 in the user interface 620 shown in FIG. 6(B), and "CNY 9.9" in the second advertisement is dynamic content.

S106: The network device 200 sends the second advertisement to the electronic device 100. S107: The electronic device 100 displays the second advertisement.

In an implementation, when displaying the second advertisement, the electronic device 100 may mark the dynamic content in the second advertisement, and optionally, specifically mark the dynamic content that is in the second advertisement and that is related to the first delivery target. A marking manner may include but is not limited to adding a contour line, adding a detection box, adding a heat map, setting a color to a specific color, displaying through blinking, displaying a coordinate value, and the like. For a specific example in which the electronic device 100 displays the second advertisement, refer to the user interface 420 shown in FIG. 4(B), the user interface 520 shown in FIG. 5(B), and the user interface 620 shown in FIG. 6(B).

FIG. 16 is a schematic flowchart of a dynamic advertisement generation process according to an embodiment of this application. This process may be used to implement S105 shown in FIG. 15. The process may include but is not limited to the following steps.

S1501: A network device 200 extracts an image feature of a first advertisement.

In an implementation, the network device 200 may use the first advertisement as an input of a feature extraction model, to obtain the output image feature and optionally, a text feature. The image feature may be obtained by performing feature extraction on an image of the first advertisement, and the text feature may be obtained by performing feature extraction on an advertisement copy of the first advertisement.

S1502: The network device 200 obtains, by screening the image feature of the first advertisement, at least one image feature segment closely related to a first delivery target.

In an implementation, the network device 200 may map the image feature of the first advertisement to unified space, divide the image feature into n segments (which may also be referred to as image feature segments) (n is a positive integer), and then obtain an advertisement re-engagement rate of each segment. For example, each segment and the first delivery target are used as an input of a re-engagement rate detection model, to obtain an output advertisement re-engagement rate. An advertisement re-engagement rate of any segment may represent a degree of correlation between the segment and the first delivery target. The network device 200 may obtain, by screening the n segments based on the advertisement re-engagement rate, at least one segment closely related to the first delivery target, for example, an image feature segment whose advertisement re-engagement rate is greater than or equal to a preset re-engagement rate threshold.

S1503: The network device 200 positions, based on the at least one image feature segment closely related to the first delivery target, content that is in the first advertisement and that is related to the first delivery target.

In an implementation, the network device 200 may map the at least one image feature segment obtained in S1502 back to an advertisement image of the first advertisement, and obtain a candidate area in the advertisement image of the first advertisement. The candidate area is a set including points whose pixel values are greater than or equal to a preset first pixel threshold in the advertisement image, and a pixel value of any point (namely, a sample) may represent a correlation between the sample and the at least one image feature segment. Therefore, the candidate area may also be understood as a set of samples that are in the advertisement image and that are closely related to the at least one image feature segment. The network device 200 may further segment an instance in the advertisement image of the first advertisement. For example, instances obtained by segmenting the advertisement image 4121 in the user interface 410 shown in FIG. 4(A) include the text "Annual Favorite Item", the text "Brand A's New Smartwatch", the image 4121B, the text "New Product Price", the text "CNY 9.9", and the control 4121D. The network device 200 may position, based on the obtained candidate area and the instances, the content that is in the first advertisement and that is related to the first delivery target. Optionally, for each instance, whether a quantity of samples in a candidate area included in the instance is greater than or equal to a preset first quantity threshold is determined. When a determining result is yes, the instance is content that is in the first advertisement and that is related to the first delivery target.

S1504: The network device 200 dynamicizes the content that is in the first advertisement and that is related to the first delivery target, and obtains a dynamic advertisement (namely, a second advertisement) corresponding to the first advertisement.

In an implementation, the network device 200 may obtain a depth map of the advertisement image of the first advertisement, and use the depth map (which may also be understood as an extracted depth of field of the image) as a basis for generating the dynamic content. The dynamic advertisement corresponding to the first advertisement is generated frame by frame based on the content that is related to the first delivery target and that is positioned in S1503. In the depth map, a depth of a foreground is shallow, and a depth of a background is deep.

In some examples, the network device 200 may determine a boundary of the content that is in the first advertisement and that is related to the first delivery target. Based on the depth map of the first advertisement, a depth of field inside the boundary is retained, and a depth of field outside the boundary is gradually increased, to obtain a depth of field map constrained by the boundary. In the depth of field map constrained by the boundary, the foreground is content related to the first delivery target, and the background is other content. Then, the network device 200 may perform frame-by-frame translation of pixels (for example, pixels inside the boundary) in the advertisement image in a direction based on the depth of field map constrained by the boundary, and fill in gaps caused by pixel translation, to generate a translated image frame by frame. A shallower depth of field of a pixel in the depth of field map constrained by the boundary indicates a larger translation amplitude of the pixel. When the gaps caused by pixel translation are filled, an average value of pixels around each gap pixel may be calculated, and the gap pixel is filled with the average value. Next, the network device 200 may splice the generated translated images frame by frame or sequentially splice the generated translated images, to obtain the second advertisement through combination. Optionally, in the second advertisement, a foreground (that is, the content related to the first delivery target) has a large dynamic amplitude, that is, the foreground is dynamicized, a background (that is, content other than the content related to the first delivery target) has a small dynamic amplitude, and the second advertisement has subtle overall movement. The second advertisement generated in this way can implement a pseudo three-dimensional (three dimensional, 3D) animation effect with distinct foreground and background layers.

Not limited to the foregoing implementation, in another implementation, S1502 may alternatively be replaced with: The network device 200 obtains x pairs of closely related image and text features based on the image feature and the text feature of the first advertisement, and obtains, by screening the x pairs of image and text features, z pairs of image and text features that are closely related to the first delivery target. Specifically, the network device 200 may map the image feature and the text feature of the first advertisement to unified space, divide the image feature into s segments, divide the text feature into t segments, and pair each of the s segments with each of the t segments, to obtain y pairs of image and text features, where y=s*t, and s, t, and y are positive integers. Then, the network device 200 may obtain a correlation coefficient of each pair of image and text features in the y pairs of image and text features, for example, obtain an output correlation coefficient by using each pair of image and text features as an input of a feature correlation model. A correlation coefficient of any pair of image and text features may represent a degree of correlation between an image feature and a text feature in the pair of image and text features. The network device 200 may obtain, by screening the y pairs of image and text features based on the correlation coefficient, the x pairs of closely related image and text features, for example, image and text features whose correlation coefficient is greater than or equal to a preset image-text correlation threshold. x is a positive integer less than or equal to y. Then, the network device 200 may obtain an advertisement re-engagement rate of each of the x pairs of image and text features. An advertisement re-engagement rate of any pair of image and text features may represent a degree of correlation between the pair of image and text features and the first delivery target. The network device 200 may obtain, by screening the x pairs of image and text features based on the advertisement re-engagement rate, the z pairs of image and text features that are closely related to the first delivery target, for example, image and text features whose advertisement re-engagement rate is greater than or equal to a preset re-engagement rate threshold. z is a positive integer less than or equal to x. Correspondingly, "the at least one image feature segment closely related to the first delivery target" in S1503 needs to be replaced with "the z pairs of image and text features".

In the methods shown in FIG. 15 and FIG. 16, content semantically related to the delivery target set by the advertiser may be obtained by screening the advertisement image of the first advertisement, and the dynamic advertisement corresponding to the first advertisement is generated based on the content, for example, the content is dynamicized. Therefore, the generated dynamic advertisement includes dynamic content semantically related to the delivery target set by the advertiser. The foregoing method does not depend on an external dynamic material library, but generates the dynamic advertisement based on original content of the static advertisement (namely, the first advertisement). Therefore, there is no problem like damaging consistency of an original advertisement style. In addition, in the foregoing method, differentiated dynamic advertisements may be generated for different delivery targets. In this way, advertisement delivery scenarios of the different delivery targets can be well matched, so that an advantage of the dynamic advertisement in the advertisement delivery scenario is fully utilized.

The foregoing Embodiment 1 is described by using an example in which the to-be-processed advertisement (for example, the first advertisement in FIG. 15 and FIG. 16) is a static advertisement. In another implementation, the to-be-processed advertisement may alternatively be a dynamic advertisement. After positioning the content that is in the to-be-processed advertisement and that is related to the delivery target set by the advertiser, the network device 200 may determine whether the content is static content. If the content is static content, animation effect is added, and a specific implementation process is consistent with the implementation process of Embodiment 1. If the content is dynamic content, the content is not processed, and the second advertisement is the first advertisement in this case.

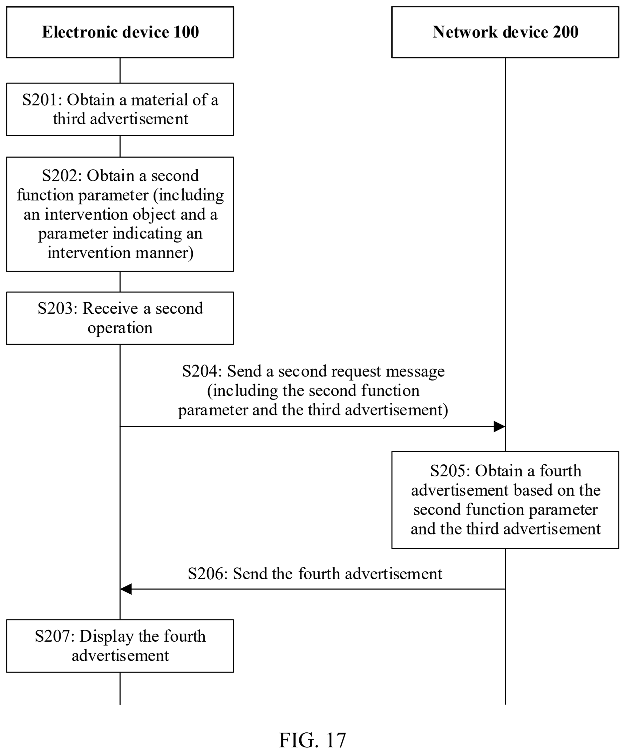

FIG. 17 is a schematic flowchart of another advertisement generation method according to an embodiment of this application. The method may be used to implement Embodiment 2. The method may include but is not limited to the following steps.

S201: An electronic device 100 obtains a material of a third advertisement.

S201 is similar to S101 in FIG. 15. A difference lies in that the first advertisement needs to be replaced with the third advertisement, and the third advertisement may be a static advertisement or a dynamic advertisement. For related descriptions, refer to the descriptions of S101 in FIG. 15. S202: The electronic device 100 obtains a second function parameter (including an intervention object and a parameter indicating an intervention manner).

In an implementation, the second function parameter may include a parameter 3 indicating that a currently used function is dynamic content intervention, a parameter 4 indicating the intervention manner (deleting animation effect or adding animation effect), the intervention object, and optionally, a parameter indicating a delivery target, and a parameter indicating a delivery scenario. For example, the advertiser may input the second function parameter based on the user interface 810 shown in FIG. 8(A). The second function parameter includes a parameter indicating that a delivery target is downloading, a parameter indicating that a currently used function is dynamic content intervention, a parameter indicating that an intervention manner is adding animation effect, and an intervention object (namely, "Button").

In some examples, the electronic device 100 may provide options of a plurality of preset intervention objects for the advertiser to select. For example, in the user interface 810 shown in FIG. 8(A), the advertiser may select a required intervention object from a plurality of preset intervention objects such as a button, a link, and a form via the setting option 816.

In some other examples, the advertiser may input text based on the electronic device 100, and the electronic device may determine the text as the intervention object. In other words, the intervention object may be input by the advertiser. For example, in the user interface 910 shown in FIG. 8(B), the advertiser may input an intervention object "PLAY button" in the input box 911.

A sequence of S201 and S202 is not limited.

S203: The electronic device 100 receives a second operation.

In an implementation, the second operation is, for example, an input for the OK control 414 in the user interface 810 shown in FIG. 8(A), the second operation may be used to trigger implementation of the dynamic content intervention function, and the electronic device 100 may perform the following S204 in response to the second operation.

S204: The electronic device 100 sends a second request message (including the second function parameter and the third advertisement) to a network device 200.

In an implementation, the second request message may be used to request to obtain an advertisement obtained by intervening in the third advertisement.

S205: The network device 200 obtains a fourth advertisement based on the second function parameter and the third advertisement.

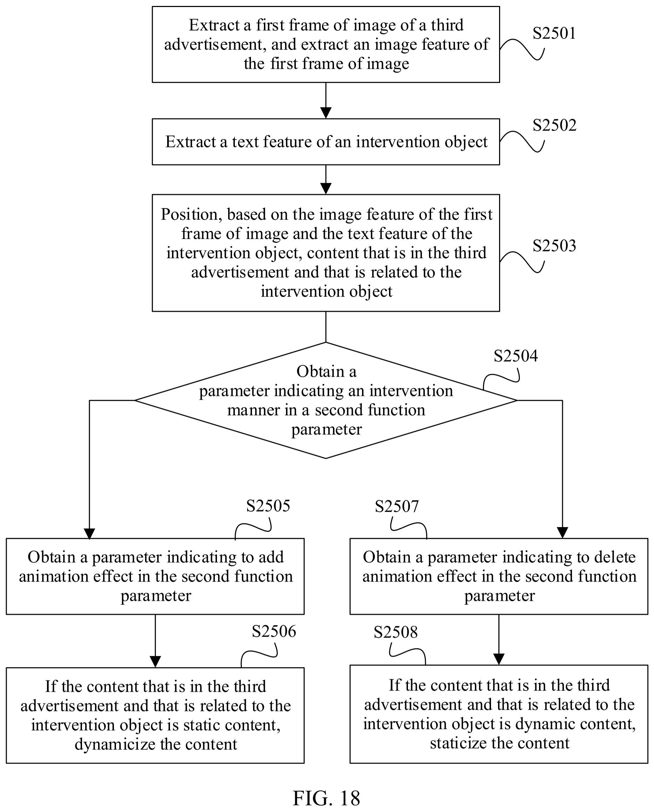

In an implementation, the network device 200 may determine, based on the parameter 3 in the second function parameter, a process of implementing dynamic content intervention. When implementing the process, the network device 200 may obtain, based on the parameter 4 (indicating the intervention manner) and the intervention object in the second function parameter, the fourth advertisement obtained by intervening in the third advertisement. In some examples, the network device 200 may position content that is in an advertisement image of the third advertisement and that is related to the intervention object, and determine, based on the intervention manner indicated by the parameter 4 and an attribute of the content (namely, dynamic content or static content), whether to intervene in the content. When the intervention manner is adding animation effect and the content is dynamic content, or when the intervention manner is deleting animation effect and the content is static content, the content is not intervened, and the fourth advertisement is the third advertisement. When the intervention manner is adding animation effect and the content is static content, the content is dynamicized, to obtain the fourth advertisement corresponding to the third advertisement. When the intervention manner is deleting animation effect and the content is dynamic content, the content is staticized, to obtain the fourth advertisement corresponding to the third advertisement. For a specific implementation process, refer to FIG. 18. Details are not described herein.

Content that is in the fourth advertisement and that is related to the intervention object matches the parameter 4 in the second function parameter. When the intervention manner indicated by the parameter 4 is adding animation effect, the content that is in the fourth advertisement and that is related to the intervention object is dynamic content. When the intervention manner indicated by the parameter 4 is deleting animation effect, the content that is in the fourth advertisement and that is related to the intervention object is static content.

In some examples, the third advertisement is the advertisement image 811 in the user interface 810 shown in FIG. 8(A). When the intervention manner is adding animation effect represented by the setting option 815 shown in FIG. 8(A), and the intervention object is "Button" represented by the setting option 816 in FIG. 8(A), the button 811A that is in the third advertisement and that is related to the intervention object is static content, the fourth advertisement obtained by intervening in the third advertisement is the advertisement image 811 in the user interface 820 shown in FIG. 8(B), and the button 811A that is in the fourth advertisement and that is related to the intervention object is dynamic content. When the intervention manner is deleting animation effect represented by the setting option 815 shown in FIG. 9(A), and the intervention object is "PLAY button" in the input box 911 shown in FIG. 9(A), because the button 811A that is in the third advertisement and that is related to the intervention object is static content, the third advertisement is not intervened, and the fourth advertisement is the third advertisement.

In some examples, the third advertisement is the advertisement image 813 in the user interface 810 shown in FIG. 8(A). When the intervention manner is adding animation effect represented by the setting option 815 shown in FIG. 8(A), and the intervention object is "Button" represented by the setting option 816 in FIG. 8(A), because the button 813A that is in the third advertisement and that is related to the intervention object is dynamic content, the third advertisement is not intervened, and the fourth advertisement is the third advertisement. When the intervention manner is deleting animation effect represented by the setting option 815 shown in FIG. 9(A), and the intervention object is "PLAY button" in the input box 911 shown in FIG. 9(A), the button 813A that is in the third advertisement and that is related to the intervention object is dynamic content, the fourth advertisement obtained by intervening in the third advertisement is the advertisement image 813 in the user interface 920 shown in FIG. 9(B), and the button 813A that is in the fourth advertisement and that is related to the intervention object is static content.

In some examples, the third advertisement is the advertisement image 814 in the user interface 810 shown in FIG. 8(A). When the intervention object is "Button" represented by the setting option 816 shown in FIG. 8(A), because the third advertisement does not include content related to the intervention object, the third advertisement is not intervened, and the fourth advertisement is the third advertisement.

S206: The network device 200 sends the fourth advertisement to the electronic device 100. S207: The electronic device 100 displays the fourth advertisement.

S207 is similar to S107 in FIG. 15. For details, refer to the description of S107 in FIG. 15. For a specific example in which the electronic device 100 displays the fourth advertisement, refer to the user interface 820 shown in FIG. 8(B) and the user interface 920 shown in FIG. 9(B).

FIG. 18 is a schematic flowchart of a dynamic content intervention process according to an embodiment of this application. The process may be used to implement S205 shown in FIG. 17. The process may include but is not limited to the following steps.

S2501: A network device 200 extracts a first frame of image of a third advertisement, and extracts an image feature of the first frame of image.

In an implementation, the network device 200 may extract the first frame of image from an advertisement image of the third advertisement, and use the first frame of image as an input of a feature extraction model, to obtain an output image feature.

S2502: The network device 200 extracts a text feature of an intervention object.

In an implementation, the network device 200 may use the intervention object as an input of the feature extraction model, to obtain an output text feature.

A sequence of S2501 and S2502 is not limited.

S2503: The network device 200 positions, based on the image feature of the first frame of image and the text feature of the intervention object, content that is in the third advertisement and that is related to the intervention object.

In an implementation, the network device 200 may map the image feature of the first frame of image obtained in S2501 and the text feature of the intervention object obtained in S2502 to unified space, then divide the image feature into a plurality of segments, and calculate a correlation coefficient between each segment and the text feature. The correlation coefficient may represent a degree of correlation between the image feature segment and the text feature. The network device 200 may obtain, by screening the plurality of image feature segments based on the correlation coefficient, an image feature segment closely related to the text feature, for example, an image feature segment whose correlation coefficient is greater than or equal to a preset intervention threshold. Next, the network device 200 may map the image feature segment obtained through screening back to the first frame of image of the third advertisement, and position image content that is in the first frame of image and that is related to the intervention object, that is, position the content that is in the third advertisement and that is related to the intervention object. In some examples, the network device 200 may obtain a candidate area in the first frame of image of the third advertisement and segment an instance in the first frame of image of the third advertisement. For each instance, whether a quantity of samples in a candidate area included in the instance is greater than or equal to a preset second quantity threshold is determined. When a determining result is yes, the instance is content that is in the third advertisement and that is related to the intervention object. The candidate area is a set including points whose pixel values are greater than or equal to the preset second pixel threshold in the first frame of image, and a pixel value of any point may represent a correlation between the point and the image feature segment obtained through screening. Therefore, the candidate area may also be understood as a set of samples that are in the first frame of image and that are closely related to the image feature segment obtained through screening.

S2504: The network device 200 obtains a parameter indicating an intervention manner in a second function parameter.

In an implementation, the network device 200 may obtain the parameter indicating the intervention manner in the second function parameter, and determine whether the intervention manner indicated by the parameter is adding animation effect or deleting animation effect.

S2505: The network device 200 obtains a parameter indicating to add animation effect in the second function parameter.

S2506: If the content that is in the third advertisement and that is related to the intervention object is static content, the network device 200 dynamicizes the content.

S2507: The network device 200 obtains a parameter indicating to delete animation effect in the second function parameter.

S2508: If the content that is in the third advertisement and that is related to the intervention object is dynamic content, the network device 200 staticizes the content.

In an implementation, before S2506/S2508, the network device 200 may identify a dynamic pixel in the third advertisement. In some examples, the network device 200 may calculate an average relative error between frames of each pixel in the third advertisement. When an average relative error of a pixel is greater than or equal to a preset error threshold, it is determined that the pixel is a dynamic pixel. The identified dynamic pixel may be used to determine whether the content that is in the third advertisement and that is related to the intervention object is static content or dynamic content in S2506/S2508.

In an implementation, when the network device 200 determines, in S2505, that the second function parameter includes the parameter indicating to add animation effect, the network device 200 may determine whether the content, positioned in S2503, that is in the third advertisement and that is related to the intervention object is static content or dynamic content. In some examples, the network device 200 may calculate a dynamic proportion. A denominator of the dynamic proportion is a size of an area (a sample in the area is a dynamic pixel, and the area may be referred to as an original advertisement dynamic area for short) that is in the third advertisement, that is related to the intervention object, and that is dynamic content. A numerator of the dynamic proportion is an intersection of the original advertisement dynamic area and the content, positioned in S2503, that is in the third advertisement and that is related to the intervention object. When the dynamic proportion is greater than or equal to a preset proportion threshold, it is determined that the content positioned in S2503 is dynamic content. When the dynamic proportion is less than the preset proportion threshold, it is determined that the content positioned in S2503 is static content. In S2506, when the network device 200 determines that the content positioned in S2503 is static content, the network device 200 may dynamicize the content. A specific implementation example is the same as that of S1504 in FIG. 16, and details are not described again. When the network device 200 determines that the content positioned in S2503 is dynamic content, the content may remain unchanged.

In another implementation, when the network device 200 determines, in S2507, that the second function parameter includes the parameter indicating to delete animation effect, the network device 200 may determine whether the content, positioned in S2503, that is in the third advertisement and that is related to the intervention object is static content or dynamic content. For a specific example, refer to the determining process in the foregoing example. In S2508, when the network device 200 determines that the content positioned in S2503 is dynamic content, the network device 200 may staticize the content. In some examples, the network device 200 may use a location of the content in the first frame of image of the third advertisement as a reference (the location may be referred to as a reference location). For each of other frames of images of the third advertisement, content that is in the frame of image and that is related to the intervention object is translated to a reference location in the frame of image, and a gap caused by pixel translation may be filled with a pixel of a static area (for example, a surrounding area of the content related to the intervention object) of the frame of image. When the network device 200 determines that the content positioned in S2503 is static content, the content may remain unchanged.

The advertisement obtained in S2506/S2508 is a fourth advertisement.

In the methods shown in FIG. 17 and FIG. 18, content semantically related to the intervention object input by the advertiser may be obtained by screening the advertisement image of the third advertisement, and the content is intervened based on the intervention manner (deleting animation effect or adding animation effect) set by the advertiser. Animation effect of other content is not affected. In other words, operations of deleting animation effect or adding animation effect may be performed on specific content in the advertisement in batches based on text input by the advertiser, and the advertiser does not need to visually or manually search for content that needs to be intervened in each advertisement or manually add animation effect or delete animation effect. This greatly improves generation efficiency and configuration efficiency of a dynamic advertisement, and improves availability of a dynamic advertisement function.

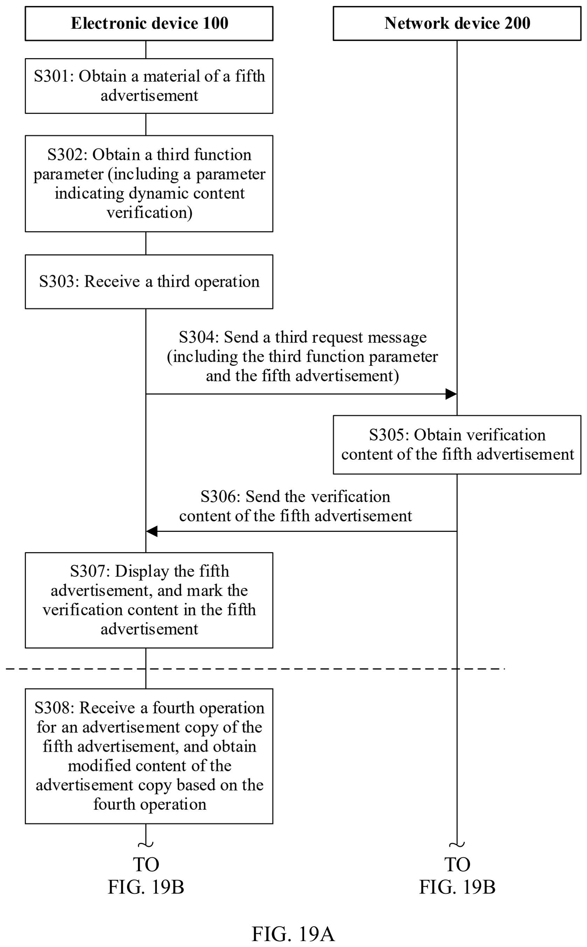

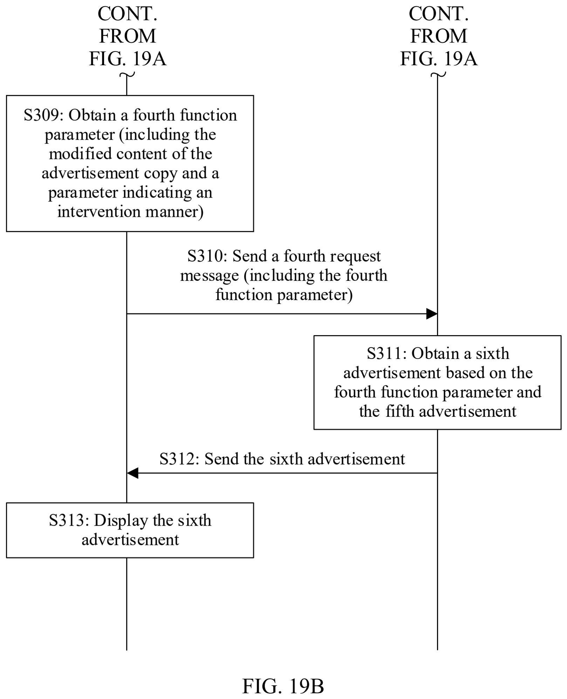

FIG. 19A and FIG. 19B are a schematic flowchart of still another advertisement generation method according to an embodiment of this application. The method may be used to implement Embodiment 3. The method may include but is not limited to the following steps.

S301: An electronic device 100 obtains a material of a fifth advertisement.

S301 is similar to S101 in FIG. 15. A difference lies in that the first advertisement needs to be replaced with the fifth advertisement, and the fifth advertisement is a dynamic advertisement. For related descriptions, refer to the descriptions of S101 in FIG. 15.

S302: The electronic device 100 obtains a third function parameter (including a parameter indicating dynamic content verification).

In an implementation, the third function parameter may include a parameter 5 indicating that a currently used function is dynamic content verification, and optionally, a parameter indicating a delivery target and a parameter indicating a delivery scenario.

S303: The electronic device 100 receives a third operation.

In an implementation, the third operation is, for example, an input for the OK control 414 in the user interface 1110 shown in FIG. 11(A), the third operation may be used to trigger implementation of the dynamic content verification function, and the electronic device 100 may perform the following S304 in response to the third operation.

S304: The electronic device 100 sends a third request message (including the third function parameter and the fifth advertisement) to a network device 200.

In an implementation, the third request message may be used to request to obtain verification content of the fifth advertisement.

S305: The network device 200 obtains the verification content of the fifth advertisement.

In an implementation, the verification content may include an association relationship between dynamic content and an advertisement copy segment in the fifth advertisement. Optionally, in the association relationship, one piece of dynamic content may be associated with one advertisement copy segment, and any piece of dynamic content and an associated advertisement copy segment may be referred to as associated content.

In an implementation, the network device 200 may identify a dynamic pixel in the fifth advertisement. For a specific implementation example, refer to the description of identifying the dynamic pixel in FIG. 18. The network device 200 may further extract an image feature and a text feature in the fifth advertisement, and obtain p pairs of closely related image and text features in the fifth advertisement, where p is a positive integer. For a specific implementation example, refer to the description of obtaining the x pairs of image and text features in FIG. 16. Then, the network device 200 may position the dynamic content and the associated advertisement copy segment in the fifth advertisement based on the p pairs of image and text features and the identified dynamic pixel, to use the dynamic content and the associated advertisement copy segment as the verification content. In some examples, the network device 200 may map image features in the p pairs of image and text features back to an advertisement image of the fifth advertisement, obtain a candidate area in the advertisement image of the fifth advertisement, and segment an instance in the advertisement image of the fifth advertisement. The candidate area is a set including points whose pixel values are greater than or equal to a preset third pixel threshold in the advertisement image. A pixel value of any point may represent a correlation between the point and the image features in the p pairs of image and text features. Then, for each instance, it is determined whether a condition is met: A quantity of samples in a candidate area included in the instance is greater than or equal to a preset third quantity threshold, and a quantity of dynamic pixels included in the instance is greater than or equal to a preset fourth quantity threshold. When it is determined that the condition is met, the instance (namely, the dynamic content in the fifth advertisement) and an associated advertisement copy segment are used as the associated content. The instance is positioned based on one image feature in the p pairs of image and text features. The network device 200 may obtain a text feature (that is, belongs to a pair of image and text features) corresponding to the image feature, and determine an advertisement copy segment to which the text feature belongs as the advertisement copy segment associated with the instance.

S306: The network device 200 sends the verification content of the fifth advertisement to the electronic device 100.

S307: The electronic device 100 displays the fifth advertisement, and marks the verification content in the fifth advertisement.

In an implementation, the electronic device 100 may mark, in the displayed fifth advertisement, the dynamic content and the associated advertisement copy segment in the fifth advertisement. Different associated content is marked in different manners. For an example of the marking manner, refer to the foregoing manner of marking the dynamic content and the foregoing manner of marking the advertisement copy segment. In some examples, as shown in FIG. 11(B), in the advertisement d (including the advertisement image 4121 and the advertisement copy 1111) shown in the advertisement page editing area 412 in the user interface 1120, the dynamic content image 4121B and "CNY 9.9" in the text 4121C are marked with detection boxes, but the detection boxes are filled with different colors. Both the advertisement copy segment "Smartwatch" and the advertisement copy segment "Ultra-low Price" are marked with shading backgrounds, but colors of the shading backgrounds are different. In other words, associated content 1 (the dynamic content image 4121B and the advertisement copy segment "Smartwatch") and associated content 2 ("CNY 9.9" in the text 4121C and the advertisement copy segment "Ultra-low Price") are marked with different colors.

In an implementation, the electronic device 100 may further provide a single-point intervention function. To be specific, an advertiser may intervene in, by modifying an advertisement copy, dynamic content associated with modified content in the advertisement. In some examples, after S307, the method further includes the following steps.

S308: The electronic device 100 receives a fourth operation for an advertisement copy of the fifth advertisement, and obtains modified content of the advertisement copy based on the fourth operation.

In an implementation, the electronic device 100 may receive the fourth operation for the advertisement copy of the fifth advertisement, modify the advertisement copy of the fifth advertisement in response to the fourth operation, and obtain the modified content of the advertisement copy of the fifth advertisement. The modified content may be content that is added (which may be referred to as added content for short) or may be content that is deleted (which may be referred to as deleted content for short). In some examples, before the electronic device 100 receives the fourth operation, the fifth advertisement may include the advertisement copy, or may not include an advertisement copy. For example, the fifth advertisement does not include an advertisement copy, and the fourth operation is used to add an advertisement copy to the fifth advertisement.

S309: The electronic device 100 obtains a fourth function parameter (including the modified content of the advertisement copy and a parameter indicating an intervention manner).

In an implementation, the fourth function parameter may include the parameter 6 indicating the intervention manner (deleting animation effect or adding animation effect), the modified content of the advertisement copy of the fifth advertisement, the parameter indicating that the currently used function is dynamic content verification, and optionally, the parameter indicating the delivery target, and the parameter indicating the delivery scenario. The parameter 6 may be determined based on a type of the modified content (that is, added content or deleted content). When the modified content is added content, the intervention manner indicated by the parameter 6 is adding animation effect. When the modified content is deleted content, the intervention manner indicated by the parameter 6 is deleting animation effect. Not limited to the foregoing implementation, in another implementation, the parameter 6 may alternatively indicate the type of the modified content (that is, added content or deleted content), so that the network device 200 determines the intervention manner based on the parameter 6.

S310: The electronic device 100 sends a fourth request message (including the fourth function parameter) to the network device 200.

In an implementation, the fourth request message may include the fourth function parameter and identification information of the fifth advertisement. The electronic device 100 has sent all content of the fifth advertisement in S304. In this case, only the identification information may be sent, to reduce a data transmission amount. In another implementation, the fourth request message may alternatively include the fourth function parameter and the fifth advertisement.

In an implementation, the fourth request message may be used to request to obtain an advertisement obtained by intervening in the fifth advertisement.

S311: The network device 200 obtains a sixth advertisement based on the fourth function parameter and the fifth advertisement.

In an implementation, the network device 200 may obtain, based on the parameter 6 (indicating the intervention manner) in the fourth function parameter and the modified content of the advertisement copy, the sixth advertisement obtained by intervening in the fifth advertisement. In some examples, the network device 200 may first obtain content that is in the advertisement image of the fifth advertisement and that is associated with the modified content. For example, when the modified content is deleted content, dynamic content associated with the deleted content may be obtained based on the association relationship obtained in S305. When the modified content is added content, content (static content or dynamic content) that is in the advertisement image of the fifth advertisement and that is associated with the added content may be positioned. A positioning process is similar to S2502 to S2504 in FIG. 17, and a difference lies in that the intervention object needs to be replaced with the added content. Then, the network device 200 may determine, based on the intervention manner indicated by the parameter 6 and an attribute of the obtained content (that is, dynamic content or static content), whether to intervene in the content. When the intervention manner is adding animation effect and the content is dynamic content, or when the intervention manner is deleting animation effect and the content is static content, the content is not intervened, and the sixth advertisement is the fifth advertisement. When the intervention manner is adding animation effect and the content is static content, the content is dynamicized, to obtain the sixth advertisement corresponding to the fifth advertisement. When the intervention manner is deleting animation effect and the content is dynamic content, the content is staticized, to obtain the sixth advertisement corresponding to the fifth advertisement. A specific implementation process is similar to S2504 to S2508 in FIG. 18, and details are not described again.

Content that is in the sixth advertisement and that is related to modified content matches the parameter 6 in the fourth function parameter. When the intervention manner indicated by the parameter 6 is adding animation effect, the content that is in the sixth advertisement and that is related to the modified content is dynamic content. When the intervention manner indicated by the parameter 6 is deleting animation effect, the content that is in the sixth advertisement and that is related to the modified content is static content.

In some examples, as shown in FIG. 11(B), the fifth advertisement is the advertisement d (including the advertisement image 4121 and the advertisement copy 1111) shown in the advertisement page editing area 412 in the user interface 1120. When a modified advertisement copy is display content of the text box 1112 in the user interface 1210 shown in FIG. 12 (in this case, the modified content is deleted content "Ultra-low Price", and correspondingly, the intervention manner is deleting animation effect), "CNY 9.9" that is in the fifth advertisement and that is related to the modified content is dynamic content, the sixth advertisement obtained by intervening in the fifth advertisement is the advertisement shown in the advertisement page editing area 412 in the user interface 1210, and "CNY 9.9" that is in the sixth advertisement and that is related to the modified content is static content. When a modified advertisement copy is display content of the text box 1112 in the user interface 1310 shown in FIG. 13 (in this case, the modified content is added content "Click the Buy Now Button to Purchase", and correspondingly, the intervention manner is adding animation effect), the control 4121D that is in the fifth advertisement and that is related to the modified content is static content, the sixth advertisement obtained by intervening in the fifth advertisement is the advertisement shown in the advertisement page editing area 412 in the user interface 1310, and the control 4121D that is in the sixth advertisement and that is related to the modified content is dynamic content.

S312: The network device 200 sends the sixth advertisement to the electronic device 100.

S313: The electronic device 100 displays the sixth advertisement.

S313 is similar to S307. For details, refer to the description of S307. For a specific example in which the electronic device 100 displays the sixth advertisement, refer to the user interface 1210 shown in FIG. 12 and the user interface 1310 shown in FIG. 13.

In the method shown in FIG. 19A and FIG. 19B, the electronic device 100 may mark, in a visual interface, verification content of at least one dynamic advertisement. For each dynamic advertisement, different associated content (that is, dynamic content and an associated advertisement copy segment in an advertisement image) may be marked in different manners, and an association relationship between the dynamic content and the advertisement copy segment in the advertisement image is clear. The advertiser can intuitively and conveniently obtain the association relationship, and can verify dynamic content in the dynamic advertisement in batches. The advertiser does not need to visually or manually search for the dynamic content and the associated advertisement copy segment for each advertisement. This greatly improves verification efficiency.

In addition, content semantically related to the content modified by the advertiser for the advertisement copy may be obtained by screening the advertisement image of the fifth advertisement, and the content is intervened without affecting animation effect of other content. In other words, an operation of deleting animation effect or adding animation effect may be performed on specific content in the advertisement based on the content modified by the advertiser for the advertisement copy. The advertiser does not need to visually or manually search for the content that needs to be intervened or manually add or delete animation effect. This greatly improves generation efficiency and configuration efficiency of a dynamic advertisement, and improves availability of a dynamic advertisement function.

In FIG. 19A and FIG. 19B, an example in which the process of obtaining the verification content and the process of obtaining the intervened advertisement are separately triggered is used for description. In another implementation, the processes may alternatively be triggered at the same time. For example, the electronic device 100 may receive the third operation and the fourth operation, obtain the fourth function parameter and the fifth advertisement, and send the request message (including the fourth function parameter and the fifth advertisement) to the network device 200. The network device 200 obtains the sixth advertisement obtained by intervening in the fifth advertisement and verification content of the sixth advertisement. The electronic device 100 may receive the sixth advertisement and the verification content of the sixth advertisement that are returned by the network device 200, display the sixth advertisement, and mark the verification content in the sixth advertisement.

Embodiment 3 is described by using an example in which the single-point intervention function is a sub-function of dynamic content verification. In another implementation, the single-point intervention function may alternatively be an independent function. For example, the setting option 413C in the user interface 1210 shown in FIG. 12 may be set to single-point intervention. For another example, the fourth function parameter shown in FIG. 19B is not a parameter indicating that the currently used function is dynamic content verification, but a parameter indicating that the currently used function is single-point intervention.

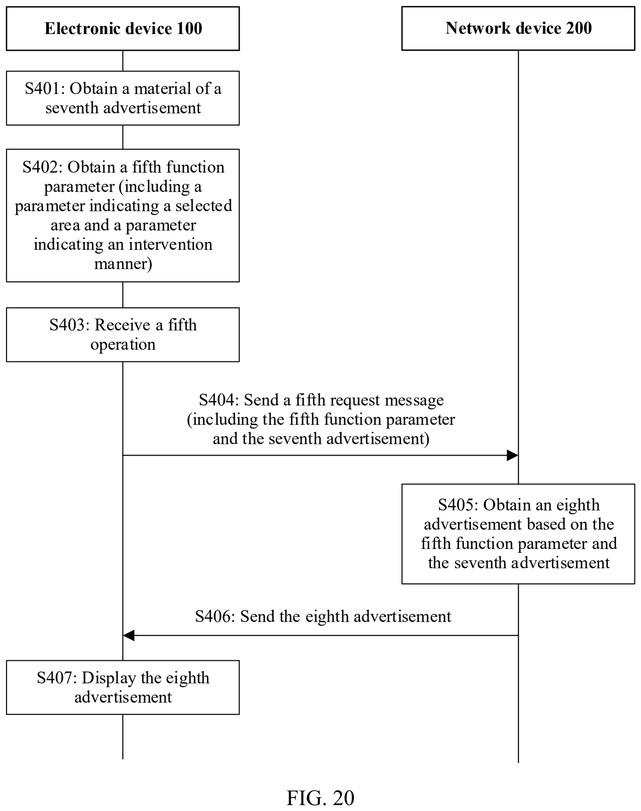

FIG. 20 is a schematic flowchart of yet another advertisement generation method according to an embodiment of this application. The method may be used to implement Embodiment 2. The method may include but is not limited to the following steps.

S401: An electronic device 100 obtains a material of a seventh advertisement.

S401 is similar to S101 in FIG. 15. A difference lies in that the first advertisement needs to be replaced with the seventh advertisement, and the seventh advertisement may be a static advertisement or a dynamic advertisement. For related descriptions, refer to the descriptions of S101 in FIG. 15.

S402: The electronic device 100 obtains a fifth function parameter (including a parameter indicating a selected area and a parameter indicating an intervention manner).

In an implementation, the fifth function parameter may include a parameter 7 indicating a selected area in an advertisement image of the seventh advertisement, a parameter 8 indicating an intervention manner (deleting animation effect or adding animation effect), a parameter indicating that a currently used function is advertisement area intervention, and optionally, a parameter indicating a delivery target, and a parameter indicating a delivery scenario.

In an implementation, when displaying the seventh advertisement, the electronic device 100 may receive an input for the advertisement image of the seventh advertisement, and determine the selected area in the advertisement image based on the input, to determine the parameter 7. For example, the seventh advertisement is the advertisement displayed in the advertisement page editing area 412 in the user interface 1410 shown in FIG. 14(A). The electronic device 100 may receive an input for the advertisement area 1411 in the advertisement image 4121 shown in the advertisement page editing area 412, determine the advertisement area 1411 as a selected area, and mark the advertisement area 1411 in the advertisement image 4121. For details, refer to the advertisement image 4121 in the user interface 1420 shown in FIG. 14(B).

In an implementation, the electronic device 100 may receive an input of an advertiser, and determine the intervention manner based on the input, to determine the parameter 8. For example, the electronic device 100 may receive an input of adding animation effect or deleting animation effect displayed in the setting option 1422 in the user interface 1420 shown in FIG. 14(B), and determine, based on the input, that the intervention manner is adding animation effect or deleting animation effect.

S403: The electronic device 100 receives a fifth operation.

In an implementation, the fifth operation is, for example, an input for the OK control 414 in the user interface 1420 shown in FIG. 14(B). The fifth operation may be used to trigger implementation of the advertisement area intervention function. The electronic device 100 may perform the following S404 in response to the fifth operation.

S404: The electronic device 100 sends a fifth request message (including the fifth function parameter and the seventh advertisement) to a network device 200.

In an implementation, the fifth request message may be used to request to obtain an advertisement obtained by intervening in the selected area in the seventh advertisement.

S405: The network device 200 obtains an eighth advertisement based on the fifth function parameter and the seventh advertisement.

In an implementation, the network device 200 may obtain, based on the parameter 7 (indicating the selected area) and the parameter 8 (indicating the intervention manner) in the fifth function parameter, the eighth advertisement obtained by intervening in the seventh advertisement. In some examples, the network device 200 may determine the selected area in the seventh advertisement based on the parameter 7, and obtain at least one piece of advertisement content in the selected area. Then, for any piece of advertisement content in the at least one piece of advertisement content, the network device 200 may determine, based on the intervention manner indicated by the parameter 8 and an attribute of the advertisement content (that is, dynamic content or static content), whether to intervene in the content. When the intervention manner is adding animation effect and the advertisement content is dynamic content, or when the intervention manner is deleting animation effect and the advertisement content is static content, the content is not intervened, and the eighth advertisement is the seventh advertisement. When the intervention manner is adding animation effect and the advertisement content is static content, the content is dynamicized, to obtain the eighth advertisement corresponding to the seventh advertisement. When the intervention manner is deleting animation effect and the advertisement content is dynamic content, the content is staticized, to obtain the eighth advertisement corresponding to the seventh advertisement. A specific implementation process is similar to S2504 to S2508 in FIG. 18, and details are not described again.

Content in a selected area of the eighth advertisement matches the parameter 8 in the fifth function parameter. When the intervention manner indicated by the parameter 8 is adding animation effect, the content in the selected area of the eighth advertisement is dynamic content. When the intervention manner indicated by the parameter 8 is deleting animation effect, the content in the selected area of the eighth advertisement is static content.

In some examples, the seventh advertisement is the advertisement image 4121 in the user interface 1420 shown in FIG. 14(B), the selected area is the advertisement area 1411 in the advertisement image 4121, and the advertisement area 1411 includes the dynamic image 4121B, the dynamic text "CNY 9.9", and the static text "New Product Price". When the intervention manner is adding animation effect, in the advertisement area 1411 of the eighth advertisement obtained by intervening in the seventh advertisement, the image 4121B, the text "CNY 9.9", and the text "New Product Price" are all dynamic content. When the intervention manner is deleting animation effect, in the advertisement area 1411 of the eighth advertisement obtained by intervening in the seventh advertisement, the image 4121B, the text "CNY 9.9", and the text "New Product Price" are all static content.

S406: The network device 200 sends the eighth advertisement to the electronic device 100. S407: The electronic device 100 displays the eighth advertisement.

S407 is similar to S107 in FIG. 15. For details, refer to the description of S107 in FIG. 15. For a specific example in which the electronic device 100 displays the eighth advertisement, refer to the user interface 1420 shown in FIG. 14(B).

In the foregoing embodiment, an example in which the electronic device 100 requests the network device 200 to obtain the processed advertisement/verification content of the advertisement is used for description. In some other embodiments, the electronic device 100 may alternatively obtain the processed advertisement/verification content of the advertisement. That is, an operation performed by the network device 200 may alternatively be performed by the electronic device 100.

In the foregoing embodiment, an example in which the function parameter of the dynamic advertisement includes the parameter indicating the currently used function (for example, dynamic content intervention) is used for description. In some other embodiments, the function parameter may alternatively not include the parameter indicating the currently used function.

All or a part of the method provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like. In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An advertisement generation method, applied to an electronic device or an application, wherein the method comprises:
obtaining a first advertisement, wherein the first advertisement comprises first content and second content, the first content and the second content are static content, the first content is related to a first function parameter, and the second content is not related to the first function parameter;
receiving a first operation;
sending a first advertisement generation request to a network device in response to the first operation, wherein the first advertisement generation request comprises the first function parameter and the first advertisement; and
obtaining a second advertisement from the network device, and displaying the second advertisement, wherein the second advertisement is obtained based on the first advertisement and the first function parameter, the second advertisement comprises third content and the second content, and the third content is dynamic displaying of the first content.

2. The method according to claim 1, wherein the first content is an image, text, a control, a form, a map, or a calendar related to the first function parameter.

3. The method according to claim 1 or 2, wherein the first advertisement further comprises fourth content, the fourth content is dynamic content related to the first function parameter, and the second advertisement further comprises the fourth content.

4. The method according to any one of claims 1 to 3, wherein the first function parameter indicates a first delivery target, and the first delivery target is any one of the following: download, activation, registration, form, click, jump, payment, next-day retention, and re-engagement.

5. The method according to any one of claims 1 to 4, wherein the first content is not related to a second function parameter, the second content is related to the second function parameter, the second function parameter indicates a second delivery target, the second delivery target is different from the first delivery target, and the method further comprises:
after obtaining the first advertisement, receiving a second operation;
sending a second advertisement generation request to the network device in response to the second operation, wherein the second advertisement generation request comprises the second function parameter and the first advertisement; and
obtaining a third advertisement from the network device, and displaying the third advertisement, wherein the third advertisement is obtained based on the first advertisement and the second function parameter, the third advertisement comprises the first content and fifth content, and the fifth content is dynamic displaying of the second content.

6. The method according to any one of claims 1 to 5, wherein the first function parameter comprises a first intervention object and a first intervention manner, the first intervention manner is adding animation effect, the first content is related to the first intervention object, and the second content is not related to the first intervention object.

7. The method according to claim 6, wherein before receiving the first operation, the method further comprises:
determining the first intervention object based on first text input by a user; or
determining the first intervention object based on a selection operation of a user, wherein the first intervention object comprises at least one of the following: text, an image, a button, a link, a form, an input box, a map, and a calendar.

8. The method according to any one of claims 1 to 7, wherein the method further comprises:
obtaining a fourth advertisement, wherein the fourth advertisement comprises sixth content, and the sixth content is dynamic content;
receiving a third operation;
sending a third advertisement generation request to the network device in response to the third operation, wherein the third advertisement generation request comprises a third function parameter and the fourth advertisement, the third function parameter comprises a second intervention object and a second intervention manner, the second intervention manner is deleting animation effect, and the sixth content is related to the second intervention object; and
obtaining a fifth advertisement from the network device, and displaying the fifth advertisement, wherein the fifth advertisement is obtained based on the third function parameter and the fourth advertisement, the fifth advertisement comprises seventh content, and the seventh content is static displaying of the sixth content.

9. The method according to any one of claims 1 to 8, wherein the method further comprises:
before receiving the first operation, receiving second text added by the user to the first advertisement, wherein the first function parameter indicates to dynamically display content related to the second text, the first content is related to the second text, and the second content is not related to the second text.

10. The method according to any one of claims 1 to 9, wherein the method further comprises:
obtaining a sixth advertisement, wherein the sixth advertisement comprises eighth content and an advertisement copy, and the eighth content is dynamic content;
receiving a fourth operation;
deleting third text from the advertisement copy of the sixth advertisement in response to the fourth operation, wherein the eighth content is related to the third text;
receiving a fifth operation;
sending a fourth advertisement generation request to the network device in response to the fifth operation, wherein the fourth advertisement generation request comprises a fourth function parameter and the sixth advertisement, and the fourth function parameter indicates to statically display content related to the third text; and
obtaining a seventh advertisement from the network device, and displaying the seventh advertisement, wherein the seventh advertisement is obtained based on the fourth function parameter and the sixth advertisement, the seventh advertisement comprises ninth content, and the ninth content is static displaying of the eighth content.

11. The method according to any one of claims 1 to 10, wherein the second advertisement further comprises tenth content, the third content is first dynamic displaying, and the tenth content is second dynamic displaying.

12. The method according to any one of claims 1 to 11, wherein the first function parameter comprises a third intervention manner and a first area parameter, the third intervention manner is adding animation effect, the first area parameter indicates a first area in the first advertisement, the first content is located in the first area, and the second content is located outside the first area.

13. The method according to any one of claims 1 to 12, wherein the method further comprises:
obtaining an eighth advertisement, wherein the eighth advertisement comprises eleventh content, and the eleventh content is dynamic content;
receiving a sixth operation;
sending a fifth advertisement generation request to the network device in response to the sixth operation, wherein the fifth advertisement generation request comprises a fifth function parameter and the eighth advertisement, the fifth function parameter comprises a fourth intervention manner and a second area parameter, the fourth intervention manner is deleting animation effect, the second area parameter indicates a second area in the eighth advertisement, and the eleventh content is located in the second area; and
obtaining a ninth advertisement from the network device, and displaying the ninth advertisement, wherein the ninth advertisement is obtained based on the fifth function parameter and the eighth advertisement, the ninth advertisement comprises twelfth content, and the twelfth content is static displaying of the eleventh content.

14. An advertisement generation method, applied to a network device, wherein the method comprises:
receiving a first advertisement generation request sent by an electronic device or an application, wherein the first advertisement generation request comprises a first function parameter and a first advertisement, the first advertisement comprises first content and second content, the first content and the second content are static content, the first content is related to the first function parameter, and the second content is not related to the first function parameter;
obtaining a second advertisement based on the first function parameter and the first advertisement, wherein the second advertisement comprises third content and the second content, and the third content is dynamic displaying of the first content; and
sending the second advertisement to the electronic device or the application.

15. The method according to claim 14, wherein the first content is an image, an animation, text, a control, a form, a map, or a calendar related to the first function parameter.

16. The method according to claim 14 or 15, wherein the first advertisement further comprises fourth content, the fourth content is dynamic content related to the first function parameter, and the second advertisement further comprises the fourth content.

17. The method according to any one of claims 14 to 16, wherein the first function parameter indicates a first delivery target, and the first delivery target is any one of the following: download, activation, registration, form, click, jump, payment, next-day retention, and re-engagement.

18. The method according to any one of claims 14 to 17, wherein the first content is not related to a second function parameter, the second content is related to the second function parameter, the second function parameter indicates a second delivery target, the second delivery target is different from the first delivery target, and the method further comprises:
receiving a second advertisement generation request sent by the electronic device or the application, wherein the second advertisement generation request comprises the second function parameter and the first advertisement;
obtaining a third advertisement based on the second function parameter and the first advertisement, wherein the third advertisement comprises the first content and fifth content, and the fifth content is dynamic displaying of the second content; and
sending the third advertisement to the electronic device or the application.

19. The method according to any one of claims 14 to 18, wherein the first function parameter comprises a first intervention object and a first intervention manner, the first intervention manner is adding animation effect, the first content is related to the first intervention object, and the second content is not related to the first intervention object.

20. The method according to claim 19, wherein the first intervention object is determined by the electronic device or the application based on first text input by a user; or
the first intervention object is determined by the electronic device or the application based on a selection operation of a user, and the first intervention object comprises at least one of the following: text, an image, a button, a link, a form, an input box, a map, and a calendar.

21. The method according to any one of claims 14 to 20, wherein the method further comprises:
receiving a third advertisement generation request sent by the electronic device or the application, wherein the third advertisement generation request comprises a third function parameter and a fourth advertisement, the fourth advertisement comprises sixth content, the sixth content is dynamic content, the third function parameter comprises a second intervention object and a second intervention manner, the second intervention manner is deleting animation effect, and the sixth content is related to the second intervention object;
obtaining a fifth advertisement based on the third function parameter and the fourth advertisement, wherein the fifth advertisement comprises seventh content, and the seventh content is static displaying of the sixth content; and
sending the fifth advertisement to the electronic device or the application.

22. The method according to any one of claims 14 to 21, wherein the first function parameter indicates to dynamically display content related to second text, the first content is related to the second text, the second content is not related to the second text, and the second text is text that is added by the user to the first advertisement and that is received by the electronic device or the application.

23. The method according to any one of claims 14 to 22, wherein the method further comprises:
receiving a fourth advertisement generation request sent by the electronic device or the application, wherein the fourth advertisement generation request comprises a fourth function parameter and a sixth advertisement, the fourth function parameter indicates to statically display content related to the third text, the sixth advertisement comprises eighth content and an advertisement copy, the eighth content is dynamic content, the eighth content is related to the third text, and the third text is text deleted by the electronic device or the application from the advertisement copy of the sixth advertisement in response to a user operation;
obtaining a seventh advertisement based on the fourth function parameter and the sixth advertisement, wherein the seventh advertisement comprises ninth content, and the ninth content is static displaying of the eighth content; and
sending the seventh advertisement to the electronic device or the application.

24. The method according to any one of claims 14 to 23, wherein the second advertisement further comprises tenth content, the third content is first dynamic displaying, and the tenth content is second dynamic displaying.

25. The method according to any one of claims 14 to 24, wherein the first function parameter comprises a third intervention manner and a first area parameter, the third intervention manner is adding animation effect, the first area parameter indicates a first area in the first advertisement, the first content is located in the first area, and the second content is located outside the first area.

26. The method according to any one of claims 14 to 25, wherein the method further comprises:
receiving a fifth advertisement generation request sent by the electronic device or the application, wherein the fifth advertisement generation request comprises a fifth function parameter and an eighth advertisement, the fifth function parameter comprises a fourth intervention manner and a second area parameter, the fourth intervention manner is deleting animation effect, the second area parameter indicates a second area in the eighth advertisement, the eighth advertisement comprises eleventh content, the eleventh content is dynamic content, and the eleventh content is located in the second area;
obtaining a ninth advertisement based on the fifth function parameter and the eighth advertisement, wherein the ninth advertisement comprises twelfth content, and the twelfth content is static displaying of the eleventh content; and
sending the ninth advertisement to the electronic device or the application.

27. An electronic device, comprising a transceiver, a processor, and a memory, wherein the memory is configured to store a computer program, and the processor invokes the computer program to perform the method according to any one of claims 1 to 13.

28. A network device, comprising a transceiver, a processor, and a memory, wherein the memory is configured to store a computer program, and the processor invokes the computer program to perform the method according to any one of claims 14 to 26.

29. A computer storage medium, wherein the computer storage medium stores a computer program, and when the computer program is executed by a processor, the method according to any one of claims 1 to 13 or the method according to any one of claims 14 to 26 is implemented.

30. A computer program product, wherein when running on a device, the computer program product is configured to perform the method according to any one of claims 1 to 13 or the method according to any one of claims 14 to 26.
